(19) Europäisches Patentamt
European Patent Office
Office européen des brevets

(11) **EP 2 871 847 A1**

(12) **EUROPEAN PATENT APPLICATION**

(43) Date of publication:
**13.05.2015 Bulletin 2015/20**

(51) Int Cl.:
*H04N 19/63* (2014.01)　　　*H04N 19/115* (2014.01)
*H04N 19/136* (2014.01)　　　*H04N 19/154* (2014.01)
*H04N 19/174* (2014.01)

(21) Application number: **14075072.0**

(22) Date of filing: **12.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.11.2013　KR 20130137130**

(71) Applicant: **Samsung Electronics Co., Ltd Gyeonggi-do 443-742 (KR)**

(72) Inventors:
• **Cho, Jae-Hun**
**443-742 Gyeonggi-do (KR)**

• **Katamaneni, Sriharsha**
**443-742 Gyeonggi-do (KR)**
• **Lee, Yong-Man**
**443-742 Gyeonggi-do (KR)**
• **Cho, Sung-Dae**
**443-742 Gyeonggi-do (KR)**

(74) Representative: **Nederlandsch Octrooibureau P.O. Box 29720 2502 LS The Hague (NL)**

Remarks:
The application is published incomplete as filed (Rule 68(1) EPC).

(54) **Apparatus and method for image processing**

(57)　An image processing device and method for an image processing device to compress, for each line, an image frame formed of a plurality of lines are provided. The method according to the present application may comprise: an image quality of each line forming a single image frame is predicted, a compression rate of each line is independently determined so as to obtain the image quality predicted for each line, and an image data of a predetermined line of the single image frame is compressed by using a compression rate independently determined for the predetermined line.

FIG.10

EP 2 871 847 A1

**Description**

**BACKGROUND**

1. Field of the Invention

The present invention generally relates to an image processing device and method for compressing and decompressing image data.

2. Description of the Related Art

Broadband communication services have rapidly developed for quick transmission of information, in addition to a personal terminal that processes a large amount of information at high speed. One of the more attractive technologies is a compression technology that processes media information including a voice and an image. The compression technology corresponds to an encoding technology for reducing an amount of information. A typical example of the encoding technology is a moving picture compression encoding technology for compressing moving picture data.

For example, a moving picture compression encoding technology, such as H.264/AVC, is a standard made by International Telecommunication Union-Telecommunication Standardization Sector (ITU-T), for moving picture compression encoding.

Generally, most electronic devices that process information use various technologies for compression and releasing compression (hereinafter, referred to as "decompression") so as to reduce an amount of information. The attempt to reduce an amount of information is based on an aspect of effectively using a capacity of a recoding medium for recoding information and an aspect of providing reliable transmission.

In general, a scheme of compressing data at a maximum level, that is, at a high compression rate, requires a complex procedure for compression, and has a low speed. Conversely, a scheme of compressing data at a low level has a simple procedure for compression, and has a high speed.

For example, a variable length encoding scheme corresponds to a scheme that compresses a binary character string by allocating a different length of a code based on a frequency of a symbol having a predetermined value in the binary character string to be encoded. That is, for a symbol pattern having a high frequency in the binary character string, a short code is allocated. For a symbol pattern having a relatively low frequency, a long code is allocated. An example of the variable length encoding scheme includes an entropy encoding scheme.

In general, when a binary character string is compressed based on a variable length coding scheme, it requires a long processing time, and a length of a character string output becomes longer. Accordingly, by taking into consideration complexity of hardware or a processing time, a data compression scheme for obtaining a quality of a desired level is generally selected. Moving forward, there is a desire for a compression encoding scheme that reduces complexity of hardware and a processing time and obtains a high quality, and a corresponding decoding scheme.

**SUMMARY**

The present invention has been made to address at least the above problems and disadvantages, and to provide at least the advantages described below. Accordingly, an aspect of the present invention is to provide an image processing device and method that enables a decompressed image that is obtained by decompressing a compressed image to maintain an image quality of an original image before compression within a predetermined level.

Another aspect of the present invention is to provide an image processing device and method that minimizes damage in an image quality during compression and decompression of an image, and reduces a bandwidth.

Another aspect of the present invention is to provide an image processing device and method that compresses and decompresses an image to have a maximum PSNR, satisfying a fixed compression rate.

Another aspect of the present invention is to provide an image processing device and method that dynamically allocates a compression rate of a corresponding line based on an image quality predicted for each line forming an image frame.

Another aspect of the present invention is to provide an image compressing/decompressing device and method that compresses, for each line, an image frame formed of a plurality of lines and decompresses the image frame, in an image processing device.

Another aspect of the present invention is to provide an image processing device and method that predicts an image quality of each line forming a single image frame, independently determines a compression rate for each line so as to obtain the image quality predicted for each line, and uses a compression rate independently determined for a predetermined line when an image corresponding to the predetermined line is compressed.

Another aspect of the present invention is to provide an image processing device and method that dynamically allocates a number of compressed bits with respect to each line forming an image frame, based on a criterion different for each type of an image frame.

Another aspect of the present invention is to provide an image processing device and method that analyzes a compression performance of each line forming an image frame, and dynamically sets a compression rate for each line based on the analyzed compression performance.

Another aspect of the present invention is to provide an image processing device and method, for a case of a still image, that analyzes a compression performance for each line of an image frame, and allocates a number of compressed bits for each line of a subsequent image frame based on the compression performance analyzed for each line so as to variably apply a compression rate for each line.

Another aspect of the present invention is to provide an image processing device and method, for a case of a moving image, that allocates a number of compressed bits for a current line based on compression information of a previous line and a compression performance predicted when the current line is compressed in a single image frame, so as to variably apply a compression rate for each line.

Another aspect of the present invention is to provide an image processing device and method that uses Wavelet transform for predicting an image quality of each line forming an image frame.

Another aspect of the present invention is to provide an image processing device and method that determines whether to compress a current image frame based on an analysis result on an image quality with respect to a previous image frame.

In accordance with another aspect of the present invention, a method is provided for an image processing device to compress, for each line, an image frame formed of a plurality of lines, the method including predicting an image quality of each line forming a single image frame, independently determining a compression rate for each line so as to obtain the image quality predicted for each line, and using a compression rate independently determined for a predetermined line when an image of the predetermined line is compressed.

In accordance with another aspect of the present invention, an image processing device is provided for compressing, for each line, an image frame formed of a plurality of lines, the image processing device including a frame buffer that receives and stores an input of an image frame to be compressed; and an encoder that predicts an image quality of each line forming a single image frame output from the frame buffer, independently determines a compression rate for each line so as to obtain the image quality predicted for each line, and uses a compression rate independently determined for a predetermined line when an image of the predetermined line is compressed.

BRIEF DESCRIPTION OF THE DRAWINGS

The above and other aspects, features, and advantages of the present invention will be more apparent from the following detailed description taken in conjunction with the accompanying drawings, in which:

FIG. 1 is a diagram illustrating an example of an image processing device that compresses and decompresses an image according to an embodiment of the present invention;

FIG. 2 is a diagram illustrating an example of an image processing device that compresses and decompresses an image inside the device according to an embodiment of the present invention;

FIG. 3 is a diagram illustrating another example of an image processing device that compresses and decompresses an image inside the device according to an embodiment of the present invention

FIG. 4 is a diagram illustrating a configuration of an image processing device for compressing image data according to an embodiment of the present invention;

FIG. 5 is a block diagram illustrating an example of a configuration of an encoder for compressing a still image according to an embodiment of the present invention;

FIG. 6 is a block diagram illustrating an example of a configuration of an encoder for compressing a moving image according to an embodiment of the present invention;

FIG. 7 is a diagram illustrating an example of compressing data based on Wavelet transform according to an embodiment of the present invention;

FIG. 8 is a diagram illustrating an example of mapping between an image information rate and an image quality according to an embodiment of the present invention;

FIG. 9 is a diagram illustrating an example in which an encoder schedules a number of compressed bits according to an embodiment of the present invention;

FIG. 10 is a flowchart of a control for compressing image data in an encoder according to an embodiment of the present invention;

FIG. 11 is a flowchart of a control associated with compression performed by an encoder according to an embodiment of the present invention;

FIG. 12 is a flowchart of a control associated with a still image compression sub-routine that encodes an image frame of a still image according to an embodiment of the present invention;

FIG. 13 is a flowchart of a control associated with a moving image compression sub-routine that encodes an image frame of a moving image according to an embodiment of the present invention;

FIG. 14 is a block diagram illustrating a configuration of an image processing device according to another embodiment of the present invention;

FIG. 15 is a flowchart of a control for determining a scheme of processing an image frame based on a predicted image quality according to another embodiment of the present invention;

FIG. 16 is a flowchart of a control associated with a scheme of using a single image frame for image quality prediction in FIG. 15; and

FIG. 17 is a flowchart of a control associated with a scheme of using two image frames for image quality prediction in FIG. 15.

## DETAILED DESCRIPTION OF EMBODIEMNTS

## OF THE PRESENT INVENTION

Hereinafter, various embodiments of the present invention will be described more specifically with reference to the accompanying drawings. It should be noted that the same components of the drawings are designated by the same reference numeral throughout the figures. In the following description of the present invention, a detailed description of known functions and configurations incorporated herein will be omitted when it may make the subject matter of the present disclosure unclear.

In addition, a detailed description of known functions and configurations incorporated herein will be omitted as it may make the subject matter of the present invention unclear

Generally, an image processing device designates a single compression rate with respect to a single image frame, and thus may compress, using an identical compression rate (a ratio of a number of input bits to a number of output bits), a line having a high image quality (and/or a high compression performance) and a line having a relatively lower image quality (and/or a relatively lower compression performance) from among lines forming an image frame. That is, when it is assumed that a line having the high image quality and a line having the relatively lower image quality in the single image frame are formed of an identical number of bits, a number of compressed bits obtained by compressing the line having the high image quality and a number of compressed bits obtained by compressing the line having the relatively lower image quality are equal.

However, in reality, when an image frame is compressed by each line, the number of compressed bits obtained by compressing a line having the high image quality is less than the number of compressed bits obtained by compressing a line having the relatively lower image quality. That is, a compression rate (or a compression performance) for compressing the line having the high image quality is higher than a compression rate (or compression performance) for compressing the line having the low image quality.

For the reason above, when an identical compression rate (that is, an identical number compressed bits) is allocated to all lines forming a single image frame, too many compressed bits are allocated for the line having a good image quality and an insufficient number of compressed bits are allocated for the line having a poor image quality. Here, the image quality for each line may be closely associated with the compression performance.

For example, image quality is a yardstick expressing a level corresponding a difference in qualities between an image based on image data before compression and an image based on decompressed image data after compression. Therefore, when the image quality is good, the image quality is better than a standard image quality that may be obtained when a compression rate assigned for compressing an image frame is identically applied to all lines forming the image frame.

Therefore, a line having a good image quality may be a line having a excellent compression performance, a line having a poor image quality may be a line having a poor compression performance. That is, when it is assumed that a similar image quality is obtained through decompression, the excellent compression performance indicates that compression at a high compression rate is required. Poor compression performance indicates that compression at a low compression rate is required.

As described above, a compression rate of the line having a good image quality is higher than the line having a poor image quality, so that a similar image quality is obtained for each line when a corresponding image frame is decompressed.

To determine or allocate an optimized number of compressed bits (or compression rate) for each line forming an image frame, there is a desire for a scheduling scheme for dynamically allocating a number of compressed bits for each line based on an image quality (and/or compression performance) for each line. That is, when it is assumed that a total number of compressed bits that may be allocated for a single image frame is fixed (that is, a compression rate for an image frame is fixed), the fixed total number of compressed bits may not be divided by a number of lines forming a single image frame for allocation. However, a number of compressed bits may be independently allocated for each line based on an image quality (and/or compression performance) of each line, so as to prevent a surplus or lack of compressed bits. Allocating the number of compressed bits and determining a compression rate may be regarded as having an identical meaning.

For example, when it is assumed that an identical number of compressed bits is allocated for each line based on a compression rate assigned for a single image frame, it is preferable to withdraw a number of compressed bits that are excessively allocated (hereinafter referred to as 'a number of residual compressed bits') for a line expected to have a high compression rate and to distribute the withdrawn compressed bits as compressed bits (hereinafter referred to as 'additional compressed bits') for a number of compressed bits that a line expected to have a low compression rate lacks (hereinafter referred to as 'a number of lacking compressed bits).

Hereinafter, a description will be made with respect to a scheme of compressing an image frame according to embodiments of the present invention that predicts an image quality (level information) of each line, and allocates an optimized compression rate, that is, an optimized number of compressed bits, with respect to a corresponding line, based on the predicted image quality.

For example, a detailed operation of allocating a number of compressed bits for each line by changing a condition based on an image quality (level information) predicted for a corresponding line according to a type of an input target image frame will be described.

When an input image frame is a still image, an image quality (level information) of each line forming the image frame may be predicted by information registered in a reference table generated in advance. The reference table is a table in which level information that classifies an image quality analyzed for each line of a previous image frame is registered. For example, the reference table classifies an image quality analyzed for each line using a plurality of levels, and the image quality of each line is managed by the plurality of levels that classify an image quality. Therefore, the image quality of each line forming the image frame may be predicted based on the level information associated with an image quality analyzed for an identical line of the previous image frame in the reference table. For example, the plurality of levels that classify the image quality may correspond to 1 through n levels depending on a degree of excellence. In this example, n may be determined based on a minimum number of compressed bits and a maximum number of compressed bits, output through compression with respect to lines of a single image frame. For example, when a number of compressed bits obtained by compressing a line of the best image quality is 5, and a number of compressed bits obtained by compressing a line of the worst image quality is 14, a number of levels n that classify an image quality may be 9 (14-5).

When an input image frame is a moving image, an image quality of each line forming the image frame may be predicted based on a correlation (or similarity) with a precedent line existing in an identical image frame and an image quality level of the precedent line. Here, the image quality may be classified based on the correlation (or similarity) with the precedent line or various levels. The correlation may be classified as, for example, 'good', 'fair', and 'poor', based on a similarity between a target line to be compressed and a precedent line. However, for fine comparison, the correlation may be classified into m levels. In this example, m may also be determined based on a minimum number of compressed bits and a maximum number of compressed bits, output through compression with respect to lines of a single image frame. For example, when a number of compressed bits obtained by compressing a line of the best image quality is 7, and a number of compressed bits obtained by compressing a line of the worst image quality is 15, the number of levels m that classify a correlation may be 8 (15-7).

As described above, in preparing a reference table that is to be referred to when a compression rate is determined for each line, there is a desire for a technology of analyzing an image quality for each line forming a single image frame. For example, standard information (Low Level Band Information) that may be obtained through Wavelet transform may be used for analyzing an image quality for each line forming an image frame for compression. That is, the image quality for each line may be predicted using 'Num. of '0'/Avg. of LL band' (hereinafter referred to as "image information rate"). Here, 'Num. of '0'' denotes an accumulated number of '0's in image information related to a corresponding line, and 'Avg. of LL band' denotes an average value of standard information that may be obtained through Wavelet transform.

The image information ratio obtained for each line through Wavelet transform may be mapped with a peak signal-to-noise ratio (PSNR) actually measured with respect to a corresponding line, so as to form an image quality determining table. That is, to form the image quality determining table, a PSNR value actually needs to be measured, which may be used as a yardstick of an image quality for each line. However, the actual measurement of the PSNR of each line may not be performed for each compression, but may be performed for forming a table to be used for determining an image quality level with respect to a line forming an image frame to be compressed.

Hereinafter, embodiments of the present invention will be described with reference to attached drawings.

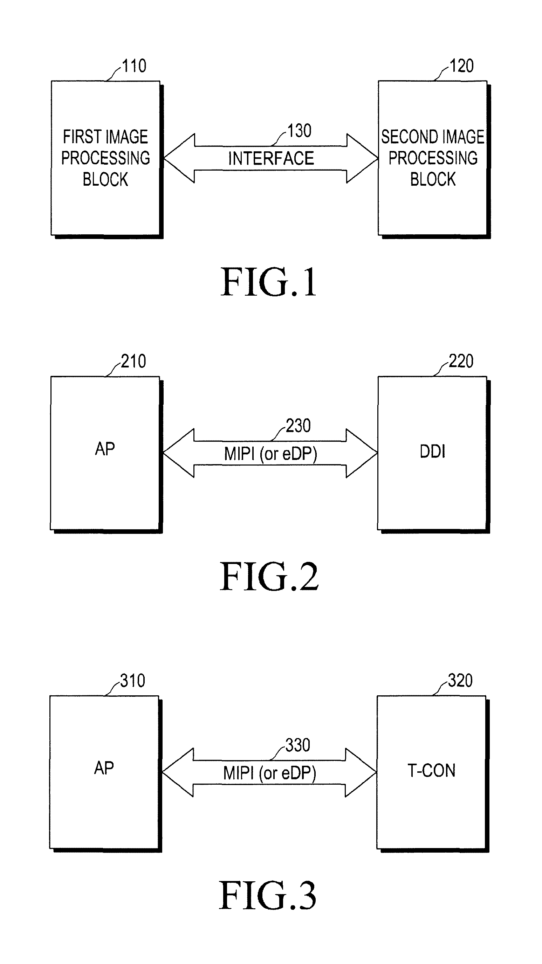

FIG. 1 is a diagram illustrating an example of an image processing device that compresses and decompresses an image according to an embodiment of the present invention.

Referring to FIG. 1, the image processing device is a device for displaying an image through image processing, which may be a smart phone, a tablet PC, and the like. The image processing device may compress an image frame corresponding to a still image or a moving image, or may decompress a compressed image frame. The image processing device may record a compressed image frame in a designated recording medium, or may transmit a compressed image frame to an external device through coupling with a predetermined communication network. Conversely, the image processing device may decompress a compressed image frame recorded in a recording medium, or may decompress a compressed image frame transmitted from an external device through coupling with a communication network.

FIG. 1 illustrates an example of an image processing device that compresses and decompresses an image frame inside the device. The image processing device of FIG. 1 is configured to perform display image processing, and includes two image processing blocks 110 and 120, and an interface 130 that connects the two image processing blocks 110 and 120. Here, the first image processing block 110 and the second image processing block 120 are coupled through the predetermined interface 130, so as to exchange an image frame.

The image frame exchanged between the first image processing block 110 and the second image processing block 120 may or may not be compressed.

First, when it is assumed that the first image processing block 110 compresses and provides image data to the second image processing block 120, the image data compressed by an encoder included in the first image processing block 110 is transferred to the second image processing block 120 through the interface 130. In this manner, when the first image processing block 110 compresses and transfers the image data to the second image processing block 120, a bandwidth used in the interface 130 for transferring the image data is reduced.

The compressed image data may be stored in a frame buffer which is a storage area included in the second image processing block 120.

When the compressed image data is a moving image, the first image processing block 110 successively compresses and transmits image frames generated based on image data. Therefore, the frame buffer of the second image processing block 120 is continuously updated by the compressed image frames which are successively transmitted from the first image processing block 120.

A decoder included in the second image processing block 120 sequentially decompresses the compressed image frames recorded in the frame buffer, and outputs image data before compression. The second image processing block 120 sequentially displays the decompressed image data.

When the compressed image data is a still image, the first image processing block 110 compresses and transmits an image frame generated based on image data. The first image processing block 110 interrupts transmission of the image frame until there is a request from the second image processing block 120. Therefore, power consumed in the first image processing block 110, and power consumed in the interface 130, and the like, may be reduced.

The compressed image frame transmitted by the first image processing block 110 may update a compressed image frame recorded in the frame buffer of the second image processing block 120.

The decoder of the second image processing block 120 decompresses the compressed image frame recorded in the frame buffer, and outputs image data before compression. The second image processing block 120 displays the decompressed image data.

As described above, when the first image processing block 110 compresses and transfers image data, the second image processing block 120 may not use an encoder, although the second image processing block 120 includes the encoder.

Subsequently, when the first image processing block 110 does not compress image data and provides the image data to the second image processing block 120, the first image processing block 110 transfers image data that is not compressed to the second image processing block 120 through the interface 130.

When the uncompressed image data is a still image, the first image processing block 110 provides information indicating that image data is a still image to the second image processing block 120. Until there is a request from the second image processing block 120, the first image processing block 110 interrupts transmission of the image data, and thus power consumed in the first image processing block 110, power consumed in the interface 130, and the like may be reduced.

The uncompressed image data may be provided to an encoder included in the second image processing block 120. The encoder included in the second image processing block 120 compresses image data, records the compressed image data in the frame buffer included inside, or updates compressed image data recorded in the frame buffer.

The decoder included in the second image processing block 120 decompresses the compressed image data recorded in the frame buffer. The second image processing block 120 displays the image data decompressed by the decoder.

As described above, an image frame is compressed by an encoder included in the first image processing block 110 or the second image processing block 120. The encoder compresses each line forming the image frame, based on a compression rate given for the image frame. Therefore, when lines forming the image frame have different compression performances, a number of compressed bits obtained through compression for each line based on the given compression rate may be different from each other. When the number of compressed bits obtained for each line is different from each other due to a difference in the compression performances even though the number of bits of the image data which forms each line is identical, it indicates that an actual compression rate, that is, a compression performance, is different from one another. For example, a number of compressed bits obtained by compressing a line having a high compression performance is less than a number of compressed bits obtained by compressing a line having a relatively lower compression performance.

By taking the above into consideration, when the encoder predicts at least one of a compression performance, a compression rate, and a number of compressed bits of each line, allocation of a number of compressed bits for each line may be scheduled. It is preferred that scheduling is performed to enable an image quality to be maximized when compression and decompression is performed, by assuming that a single image frame is compressed based on a fixed compression rate (hereinafter referred to as a 'frame compression rate'). When a single image frame is compressed based on a fixed frame compression rate, it indicates that a total number of compressed bits obtained by compressing the single image frame is not changed irrespective of scheduling. That is, although a number of compressed bits is dynamically allocated for each line through scheduling, the total number of compressed bits allocated with respect to all lines is not changed. It is preferred that a total number of compressed bits based on the scheduling does not exceed a total number of compressed bits based on a frame compression rate, even if there is a change when a number of compressed bits is allocated for each line.

For example, there is a scheduling scheme that applies a fixed frame compression rate for a single image frame, and dynamically allocates a compression rate for each line forming the single image frame. That is, scheduling is performed to withdraw compressed bits from a line having a high compression performance and allocates a number of additional compressed bits to a line having a relatively lower compression performance within a number of withdrawn compressed bits. This prevents unnecessary allocation of compressed bits, and improves an image quality of a line having a relatively lower compression performance.

Also, based on whether an image quality predicted for an image frame before compression satisfies a predetermined standard image quality, the encoder determines whether to compress the image frame, selectively applies a compression algorithm, or changes a fixed frame compression rate. This corresponds to a scheme that prevents deterioration of a displayed image quality, through selective compression.

The scheduling scheme and the selective compression scheme will be described detail in the following:

FIG. 2 is a diagram illustrating an example of an image processing device that compresses and decompresses an image inside the device according to an embodiment of the present invention. That is, a configuration of the image processing device of FIG. 2 may be an actually implemented example of the image processing device of FIG. 1.

An image processing device having a structure illustrated in FIG. 2 includes, as a representative example, a smart phone. The smart phone has a structure in which an Application Processor (AP) 210 which corresponds to the first image processing block 110 of FIG. 1 and a Display Driver IC (DDI) 220 which corresponds to the second image processing block 120 of FIG. 1 share an image frame through an interface 230. The AP 210 and the DDI 220 are components that take charge of processing a display image in a mobile device such as a smart phone.

For the interface 230 that connects the AP 210 and the DDI 220, a high-speed serial interface which readily transfers image data is used. Representative examples of a high-speed serial interface include a Mobile Industry Processor Interface (MIPI), embedded Display Port (eDP) interface, and the like.

FIG. 3 is a diagram illustrating an example of an image processing device that compresses and decompresses an image inside the device according to an embodiment of the present invention. That is, a configuration of the image processing device of FIG. 3 may be an actually implemented example of the image processing device of FIG. 1.

A representative example of an image processing device having a structure of FIG. 3 is a tablet PC. The tablet PC has a structure in which an AP 310 corresponding to the first image processing block 110 of FIG. 1 and a Timing Controller (T-CON) 320 corresponding to the second image processing block 120 of FIG. 1 share an image frame through an interface 330. The AP 310 and the T-CON 320 are components that take charge of processing a display image in a mobile device, such as a tablet PC.

For the interface 330 that connects the AP 310 and the T-CON 320, a high-speed serial interface which readily transfers image data is used. Representative examples of a high-speed serial interface include an MIPI, an eDP, and the like.

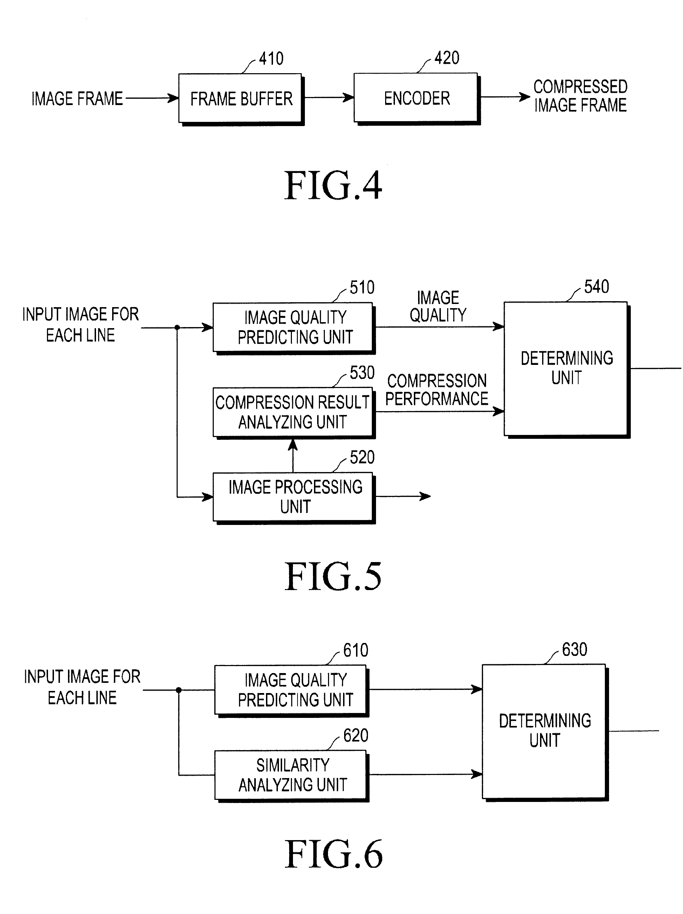

FIG. 4 is a diagram illustrating a configuration of an image processing device for compressing image data according to an embodiment of the present invention. In FIG. 4, configurations that are not associated with the present invention corresponding to the image processing device have been omitted and only a configuration that is required for compressing image data has been illustrated.

Referring to FIG. 4, an image processing device for compressing image data includes a frame buffer 410 and an encoder 420. It is apparent that a configuration of the image processing device may be changed based on a purpose and a scheme of embodying the device. For example, the frame buffer 410 is not included as a separate component, and a recording area for temporarily storing an image frame to be compressed may be included in an encoder.

The frame buffer 410 records an image frame (or image data) input for compression. A number of image frames recorded in the frame buffer 410 may vary based on a size of a buffer.

When the frame buffer 410 has a size that is sufficient to record a single image frame, the frame buffer 410 performs updating based on a single image frame unit generated by a still image or a moving image.

The encoder 420 outputs an image frame that is compressed by encoding an input image frame provided from the frame buffer 410 for each line that forms the input image frame, by taking into consideration a fixed frame compression rate. The compression rate for encoding for each line may be determined through scheduling. However, due to the fixed frame compression rate, a total number of compressed bits, which is a sum of a number of compressed bits of each line of the image frame compressed by the encoder 420, is fixed.

In particular, the encoder 420 encodes each line forming the input image frame based on an independently allocated compression rate, and performs outputting. The encoder 420 prepares a separate scheduling scheme for assigning a compression rate for each line, based on a type of image data forming the input image frame. That is, the encoder 420 distinguishably applies a scheduling scheme of dynamically assigning a compression rate with respect to each line of the input image frame when the type of the image data is a still image, and a scheduling scheme of dynamically assigning a compression rate with respect to each line of the input image frame when the type of the image data is a moving image.

Assigning a compression rate with respect to each line through scheduling has an identical meaning to determining a number of compressed bits generated by compressing each line. This is because the compression rate is defined by a ratio of a bit input for compression to a bit output through compression, as repeatedly described above. That is, when the number of bits input for compression is constant, the compression rate may be defined in proportion to the number of bits output through the compression, that is, a number of compressed bits.

The scheduling scheme for a still image adjusts a number of compressed bits for each line of a current image frame ($N^{th}$ image frame) based on a result obtained by analyzing each line forming a previous image frame ($N-1^{th}$ image frame). Adjusting a number of compressed bits of each line has an identical meaning to setting a compression rate for each line. The analysis result may be level information classified based on a compression performance, an image quality, or the like. A plurality of levels may be defined in advance for classifying a compression performance, an image quality, or the like.

The encoder 420 predicts an image quality or a compression performance for each line of the current image frame ($N^{th}$ image frame) based on the analysis result obtained for each line of the previous image frame ($N-1^{th}$ image frame). The encoder 420 determines whether to withdraw a number of compressed bits or add a number of compressed bits for each line based on the image quality or compression performance predicted for each line.

For example, the encoder 420 determines to withdraw compressed bits corresponding to a number of residual compressed bits from a line having a good image quality or a good compression performance (a line assigned with a high level), and to allocate additional compressed bits corresponding to a number of lacking compressed bits, with respect to a line having a relatively poor image quality or a relatively poor compression performance (a line assigned with a low level).

The encoder 420 accumulates a number of residual compressed bits to be withdrawn based on the determination and manages the same, and additionally allocates, to a line that requires additional allocation, compressed bits within an available range of the number of residual compressed bits that are accumulated and managed.

Through scheduling by the encoder 420, a compression rate for each line may be optimized without a change in a total number of compressed bits required for compressing a single image frame. This improves an image quality of an image frame.

The scheduling scheme for a moving image adjusts a number of compressed bits of a current line ($k^{th}$ line) based on compression information of a previous line ($k-1^{th}$ line) and compression information expected when the current line ($k^{th}$ line) is compressed in an identical image frame ($N^{th}$ image frame). Adjusting a number of compressed bits for each line has an identical meaning to setting a compression rate for each line.

The encoder 420 predicts a compression performance (or an image quality) of the current line ($k^{th}$ line) based on a compression performance (or an image quality) of the previous line ($k-1^{th}$ line) when a similarity between the previous line ($k-1^{th}$ line) and the current line ($k^{th}$ line) is at at least a predetermined level and a predicted image quality of the $N^{th}$ image frame is at least a standard.

It is noted that N is an index that is defined by a positive integer for identifying an image frame, and k is an index that is defined by a positive integer for indicating one of the plurality of lines ($1 \leq k \leq K$) forming a single image frame.

For example, the encoder 420 performs encoding with respect to a previous line ($k-1^{th}$ line) after predicting a compression performance of the previous line ($k-1^{th}$ line), and predicts a performance with respect to a current line ($k^{th}$ line). The encoder 420 determines whether a similarity between the previous line ($k-1^{th}$ line) and the current line ($k^{th}$ line) exists within a set range. When the similarity exists within the set range, the encoder 420 adjusts a number of compressed bits with respect to the current line ($k^{th}$ line), based on the compression performance predicted for the previous line ($k-1^{th}$ line) and the compression performance predicted with respect to the current line ($k^{th}$ line).

For example, when the compression performance predicted for the current line ($k^{th}$ line) corresponds to 'good' or 'fair', a number of compressed bits for the current line ($k^{th}$ line) may be withdrawn. When the predicted compression performance corresponds to 'poor', it is additionally allocated.

However, when the similarity between the previous line and the subsequent line does not exist within the set range, the encoder 420 determines a number of compressed bits of the subsequent line based on a fixed value that is previously agreed.

The similarity between the previous line ($k$-$1^{th}$ line) and the current line ($k^{th}$ line) is divided into a plurality of levels, and a different number of compressed bits may be allocated based on a similarity level. The simplest scheme classifies the similarity between the previous line ($k$-$1^{th}$ line) and the current line ($k^{th}$ line) into 'good', 'fair', and 'poor'. However, to finely determine the similarity, the similarity level may be defined based on a range of a number of compressed bits output based on a compression performance. In this example, the range of the number of compressed bits may be defined based on a minimum number of compressed bits and a maximum number of compressed bits.

The encoder 420 determines whether to withdraw a number of compressed bits or additionally add a number of compressed bits for each line based on the image quality or compression performance predicted for each line.

For example, the encoder 420 determines to withdraw compressed bits corresponding to a number of residual compressed bits from a line having a good compression performance (or good image quality), and to allocate additional compressed bits corresponding to a number of lacking compressed bits, with respect to a line having a relatively poor compression performance (a relatively poor image quality).

Through scheduling by the encoder 420 with respect to a number of compressed bits (or a compression rate), a compression rate for each line may be optimized without a change in a total number of compressed bits obtained by compressing a single image frame. This improves an image quality when an image frame is compressed and decompressed.

Scheduling by the encoder 420 with respect to the number of compressed bits (or a compression rate) may be performed based on a unit of multiple frames. That is, the encoder 420 uses a compression performance analyzed for each line for determining a number of compressed bits with respect to each line forming a single target image frame, and also may equivalently apply the compression performance analyzed for each line to a predetermined number of frames, which subsequently exist. The number of image frames to which a result obtained through one analysis is to be commonly applied may be defined or updated when needed.

FIG. 5 is a diagram illustrating an example of a structure of an encoder for compressing a still image according to an embodiment of the present invention. Each block illustrated in FIG. 5 is configured by hardware, software, or a combination of hardware and software, and independently allocates a number of compressed bits for each line of a current image frame, based on an analysis result for each line of a previous image frame. Through the analysis result for each line of the previous image frame, a compression performance, an image quality, and the like for each line of the current image frame may be predicted.

The compression performance is an example of a yardstick expressing how small a number of compressed bits is, which is obtained when image data is compressed based on the identical compression scheme. To measure the compression performance, a premise is required that an image quality associated with compression and decompression is equally obtained for each line of an image frame.

To obtain an identical image quality, it is regarded that a compression performance is higher as a number of compressed bits generated through compression becomes smaller, and a compression performance is lower as the number of compressed bits generated through compression becomes larger. For the reason above, a high compression rate may be allocated to a line having a good compression performance. However, a low compression rate may be allocated with respect to a line having a relatively poor compression performance.

For example, the compression performance may be classified based on a plurality of levels defined in advance. For example, the plurality of levels that classify the compression performance may be set in advance based on a difference between a minimum number of compressed bits and a maximum number of compressed bits, which may be obtained based on a compression performance. In this example, a level that defines each compression performance may define a number of compressed bits that is output.

Referring to FIG. 5, an image quality predicting unit 510 predicts an image quality for each line of an image frame. An example of the image quality includes a PSNR. However, prediction of an image quality for each line may not need to be performed for compressing all image frames. Preferably, prediction of an image quality for each line is not required while compression is performed with respect to image frames corresponding to a number of image frames that is preferable for maintaining an image quality, through one prediction of the image quality for each line.

For example, the image quality predicting unit 510 obtains, through Wavelet transform, an image information ratio to be used as a criterion for determining an image quality. For example, the image information ratio may be obtained based on 'a ratio of an accumulated number of '0's in image information related to a corresponding line to an average value of standard information that may be obtained through Wavelet transform (Num. of '0'/Avg. of LL band)'.

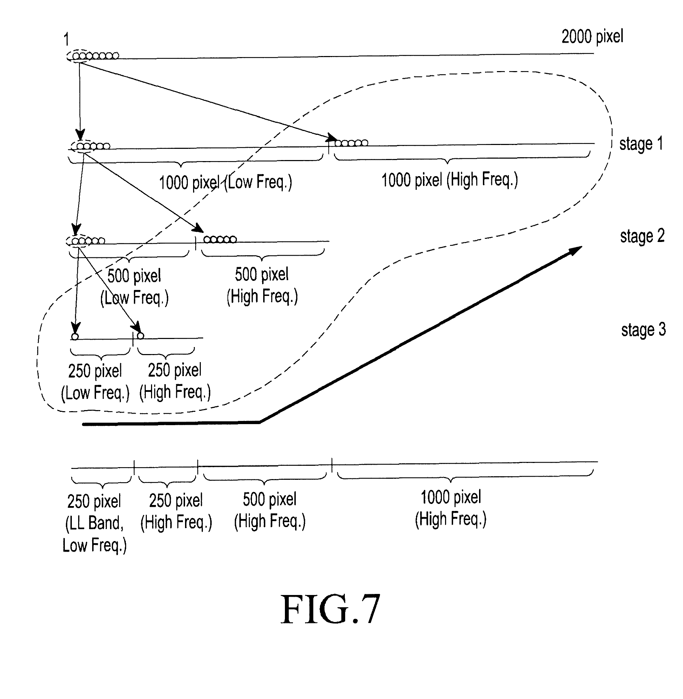

Referring now to FIG. 7, FIG. 7 is a diagram illustrating an example of compressing data based on Wavelet transform according to an embodiment of the present invention.

Referring to FIG. 7, Wavelet transform will be described. The image quality predicting unit 510 separates image data input for compression into data of a low frequency (hereinafter referred to as 'first low frequency separated data') and data of a high frequency (hereinafter referred to as 'first high frequency separated data') at stage 1. For example, a first low frequency separated data of 1000 pixels and a first high frequency separated data of 1000 pixels are separated from image data formed of 2000 pixels.

The image quality predicting unit 510 separates the first low frequency separated data into data of a low frequency (hereinafter referred to as 'second low frequency separated data') and data of a high frequency (hereinafter referred to as 'second high frequency separated data') at stage 2. For example, a second low frequency separated data of 500 pixels and a second high frequency separated data of 500 pixels are separated from the first low frequency separated data formed of 1000 pixels.

The image quality predicting unit 510 separates the second low frequency separated data into data of a low frequency (hereinafter referred to as 'third low frequency separated data') and data of a high frequency (hereinafter referred to as 'third high frequency separated data') at stage 3. For example, a third low frequency separated data of 250 pixels and a third high frequency separated data of 250 pixels are separated from the second low frequency separated data formed of 500 pixels.

A level is formed by repeatedly performing a procedure of separating a low frequency data and a high frequency data through Wavelet transform as described above, which is referred to as a pyramid level.

Low level band information corresponding to low frequency data separated through Wavelet transform at the last stage has the largest amount of image information. Therefore, the low level band information may be standard information to be mainly used for predicting an image quality of an image to be compressed/decompressed.

The image quality predicting unit 510 predicts an image quality for each line using an image information ratio defined as a ratio of a data average value of the low level band information obtained by performing Wavelet transform to an accumulated number of '0's.

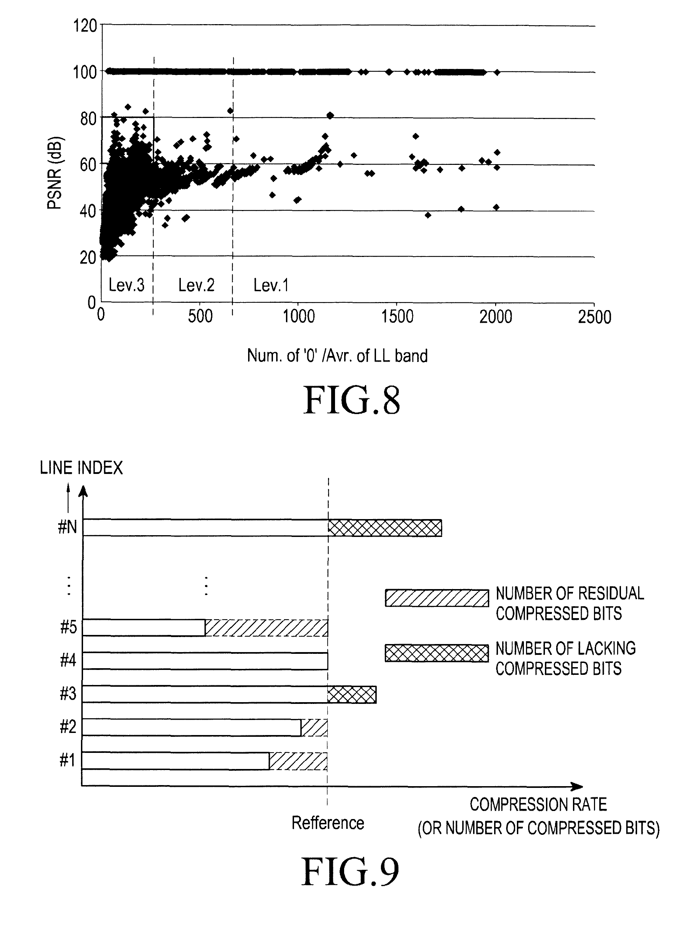

Referring now to FIG. 8, FIG. 8 is a diagram illustrating an example of mapping between an image information ratio and an image quality according to an embodiment of the present invention. That is, the example of FIG. 8 is a graph that arranges the image information ratio in an x axis and arranges an image quality value (PSNR) actually measured for each line in a y axis.

The PSNR of each line may be measured based on Equation (1).

$$\mathrm{PSNR} = 10 \cdot \log_{10}\left(\frac{\mathrm{MAX}_I^2}{\mathrm{MSE}}\right) = 20 \cdot \log_{10}\left(\frac{\mathrm{MAX}_I}{\sqrt{\mathrm{MSE}}}\right) \qquad \cdots \qquad (1)$$

Here, Mean Squared Error (MSE) is a variance calculated with respect to two identical amounts of data at an identical position, and may be defined as $\frac{1}{mn}\sum_{i=0}^{m-1}\sum_{j=0}^{n-1}\|I(i,j) - k(i,j)\|^2$. Two parameters $i$ and $j$ in Equation (1) defining the MSE, define a horizontal line and a vertical line based on image processing.

Referring to the distribution of PSNRs indicating image qualities of lines in the graph of FIG. 8, as the image information ratio in x axis is higher, relatively higher PSNRs are dominant, and as the image information ratio in x axis is lower, relatively lower PSNRs are dominant. In general, when a PSNR exceeds 30dB, a person is incapable of visually identifying a difference between two images.

Therefore, the image information ratio arranged in x axis may be classified into a plurality of levels based on the distribution of PSNRs. For example, an image information ratio less than or equal to approximately 250 is classified as a first level, an image information ratio in a range of approximately 250 ~ 700 is classified as a second level, and an image information ratio greater than or equal to approximately 700 is classified as a third level.

Referring back to FIG. 5, when a table is generated using PSNRs actually measured based on the image information ratio of FIG 8, the image quality predicting unit 510 may readily predict an image quality, that is, a PSNR, based on an image information ratio obtained for each line through Wavelet transform. The image quality predicting unit 510 provides the predicted image quality, that is, the PSNR, to a determining unit 540.

An image processing unit 520 encodes, through a predetermined compression algorithm, image data for each line, which is input for compression, and outputs a compressed bit stream as a result of encoding. In this example, a number of bits forming the output compressed bit stream determines a compression rate of a corresponding line.

A compression result analyzing unit 530 calculates a compression rate, that is, a compression performance, based on a number of bits of image data of a line that is input for compression and a number of bits of a compressed bit stream output from the image processing unit 520. The compression result analyzing unit 530 provides the calculated compression performance to the determining unit 540.

The determining unit 540 determines a number of compressed bits (that is, a compression rate) for each line, based on an image quality for each line provided by the image quality predicting unit 510 and a compression performance provided by the compression result analyzing unit 530. The determining unit 540 determines a number of compressed bits for each line, based on one of a scheme of initial allocation and a scheme of reference allocation.

The scheme of initial allocation is a scheme of scheduling a number of compressed bits for each line in a state in which level information for each line is not prepared, and the scheme of reference allocation is a scheme of scheduling a number of compressed bits for each line in a state in which level information for each line is prepared.

For example, when it is assumed that an N-1$^{th}$ image frame and an N$^{th}$ image frame are input, scheduling based on the scheme of initial allocation is performed with respect to the N-1$^{th}$ image frame, and scheduling based on the scheme of reference allocation is performed with respect to the N$^{th}$ image frame or N$^{th}$ through N+$\alpha^{th}$ image frames. $\alpha$ is a parameter that defines a period, that is, a number of image frames, to which a result of analyzing a compression performance once is to be commonly applied.

First, the scheme of initial allocation will be described. The determining unit 540 predicts an image quality for each line of a current image frame, and performs scheduling with respect to a number of compressed bits of a corresponding line based on the image quality predicted for each line and a compression performance.

The determining unit 540 classifies lines forming an image frame, based on an image quality predicted for each line forming the current image frame, and a measured compression performance (whether residual compressed bits or lacking compressed bits occur). That is, the determining unit 540 may classify the image quality of each line and the compression performance into a plurality of levels based on a predetermined criterion.

For example, when a number of compressed bits obtained by compressing a predetermined line or a predicted number of compressed bits is less than a set criterion (a standard compressed bit number), the determining unit 540 determines that a desired image quality may be obtained and compression performance is excellent, and thus classifies the predetermined line as the "first level (good quality)". Otherwise, when the number of compressed bits obtained by compressing the predetermined line or the predicted number of compressed bits is greater than or equal to the set criterion (the standard compressed bit number), the determining unit 540 analyzes an image quality of the predetermined line, and classifies the predetermined line as the "second level (moderate quality)" or the "third level (poor quality)" based on the image quality predicted by the analysis. Although this example assumes three levels, an image quality may be subdivided based on three or more levels.

The determining unit 540 determines level information related to a corresponding line through classification of each line, and generates a management table based on the level information determined for each line. The management table may be used for determining a number of compressed bits for each line according to the scheme of reference allocation.

The determining unit 540 accumulates a number of residual compressed bits obtained by compressing a predetermined line, and determines a number of residual compressed bits to be withdrawn for each line through scheduling or a number of lacking compressed bits for which additional allocation is to be performed, so as to prevent a lack of compressed bits in another predetermined line by utilizing the accumulated number of residual compressed bits.

For example, the determining unit 540 withdraws a predetermined number of residual compressed bits through actual compression with respect to lines classified as the first and the second levels, and additionally allocates compressed bits corresponding to a number of lacking compressed bits through actual compression with respect to a line classified as the third level.

Now, the scheme of reference allocation will be described. The determining unit 540 obtains level information for each line of a current image frame based on level information for each line, which is prepared through compression of a preceding image frame, and performs scheduling with respect to a number of compressed bits of a corresponding line based on the obtained level information.

For example, with reference to the management table generated through the scheme of initial allocation, the determining unit 540 accumulates a difference between a number of actually compressed bits and a number of compressed bits allocated when it is determined that level information of a predetermined line of the current image frame is the first level, and accumulates a number of compressed bits that is set aside from the first and the second levels, together, so as to allocate a number of compressed bits for compression of a line classified as the third level.

Referring now to FIG. 6, FIG. 6 is a diagram illustrating an example of a structure of an encoder for compressing a moving image according to an embodiment of the present invention. Each block is configured by hardware, software, or a combination of hardware and software, and independently allocates a number of compressed bits of a current line, based on an analysis result for a previous line in a single image frame. Through the analysis result for the previous line, a compression performance, an image quality, and the like, the current line may be predicted.

As described above with regard to FIG. 5, the compression performance is an example of a yardstick expressing how small a number of compressed bits is, which is obtained when image data is compressed based on the identical compression scheme. To measure the compression performance, a premise is required that an image quality associated with compression and decompression is equally obtained for each line of an image frame.

To obtain an identical image quality, it is regarded that a compression performance is higher as a number of compressed bits generated through compression becomes smaller, and a compression performance is lower as the number of compressed bits generated through compression becomes larger. For the reason above, a high compression rate may be allocated to a line having a good compression performance. However, a low compression rate may be allocated with respect to a line having a relatively poor compression performance.

Referring to FIG. 6, an image quality predicting unit 610 predicts an image quality for each line of an image frame. An example of the image quality includes a PSNR. The image quality predicting unit 610 may predict a PSNR through the operations identical to the image quality predicting unit 510 of FIG. 5. Therefore, the operations of the image quality predicting unit 610 for predicting a PSNR will be omitted.

A similarity analyzing unit 620 analyzes a similarity between image data corresponding to two lines in an identical image frame, and outputs a result to a determining unit 630. For example, the similarity analyzing unit 620 compares each pixel forming a $k$-$1$th line ($L_{N,k-1}$) of an $N$th image frame with a pixel existing at an identical position from among pixels forming a $k$th line ($L_{N,k}$) of the $N$th image frame, so as to analyze a similarity based on a degree of similarity. The similarity may be analyzed based on various values expressing an image. For example, a similarity of pixels may be analyzed based on values of R, G, and B, a luminance value, a brightness value, a chroma value, and the like.

A similarity output from the similarity analyzing unit 620 may be defined based on level information that may be classified into 'good', 'fair', and 'poor' and the like, a percentage, a degree, or the like. However, a degree of similarity analyzed by the similarity analyzing unit 620 may be subdivided by more concrete stages. For example, a level may be defined that distinguishes a similarity based on a range defined by a maximum number of compressed bits and a minimum number of compressed bits that may be allocated based on an image quality. This example has been sufficiently described, and thus descriptions thereof will be omitted.

The determining unit 630 performs scheduling for determining a number of compressed bits (that is, a compression rate) for each line, based on an image quality of each line provided by the image quality predicting unit 610, and information associated with a similarity provided by the similarity analyzing unit 620. The information associated with the similarity may be information indicating whether similarity exists or level information that defines a degree of similarity.

For example, when the similarity provided by the similarity analyzing unit 620 is in a predetermined range, and an image quality of a current line provided by the image quality predicting unit 610 satisfies a standard image quality set in advance, the determining unit 630 determines a number of compressed bits for the current line in proportion to an image quality of a previous line. When the two conditions are satisfied, it is determined that a number of compressed bits are additionally allocated for the current line.

Based on the determined image quality of the current line, the determining unit 630 accumulates a difference between a number of allocated compressed bits and a number of actually compressed bits, and additionally allocates a number of compressed bits that satisfies a number of lacking compressed bits in a line of a low image quality according to a quotient obtained by dividing the accumulated number of residual compressed bits by remaining lines.

However, when the similarity provided by the similarity analyzing unit 620 is outside the predetermined range, it is determined that a number of compressed bits for the current line is to be allocated based on a fixed value set in advance.

For example, when the similarity is within the predetermined range, and a predicted image quality satisfies a level in which a residual bit occurs, a fixed number of bits, set in advance for withdrawing compressed bits based on an image quality, may be withdrawn and a predetermined number of compressed bits set in advance in association with a similarity may be additionally withdrawn, from a standard compressed bit number corresponding to a number of compressed bits that may be allocated based on a frame compression rate. However, when the similarity is outside the predetermined range, and a predicted image quality satisfies a level in which a residual bit occurs, only a fixed number of compressed bits, set in advance for withdrawing compressed bits based on an image quality, is withdrawn from the standard compressed bit number corresponding to a number of compressed bits that may be allocated based on a frame compression rate.

For a result other than the above described cases, a number of withdrawn residual compressed bits may be additionally allocated.

FIG. 9 is a diagram illustrating an example in which an encoder schedules a number of compressed bits according to an embodiment of the present invention. FIG. 9 assumes that a single image frame is formed of N lines.

Referring to FIG. 9, it is assumed that first, second, and fifth lines have relatively good compression performances, a third and an $N$th line have relatively poor compression performances, and a fourth line has a compression performance identical to a fixed frame compression rate of a corresponding image frame.

Therefore, scheduling is performed to withdraw a number of residual compressed bits generated by compressing the first, second, and fifth lines and to allocate a number of compressed bits corresponding to a number of lacking compressed bits required for compressing the third and an $N$th line. In this example, a compression performance (compression rate or a number of compressed bits) which is a standard for withdrawing the number of residual compressed bits and allocating the number of lacking compressed bits may be determined based on a fixed frame compression rate (or a standard compression rate) assigned for a corresponding image frame. That is, when the compression performance (which is the standard) is assumed to be the number of compressed bits, the number of compressed bits that is used as the standard may be determined based on a quotient obtained by dividing, by a number of lines (N), a total number of compressed bits generated when an image frame is compressed based on a standard compression rate.

The number of residual compressed bits may be determined based on a level corresponding to an image quality predicted with respect to a target line or based on a level corresponding to an image quality predicted with respect to a target line and a level defining a similarity. An example of determining the number of residual compressed bits has been described, and thus a detailed description thereof will be omitted.

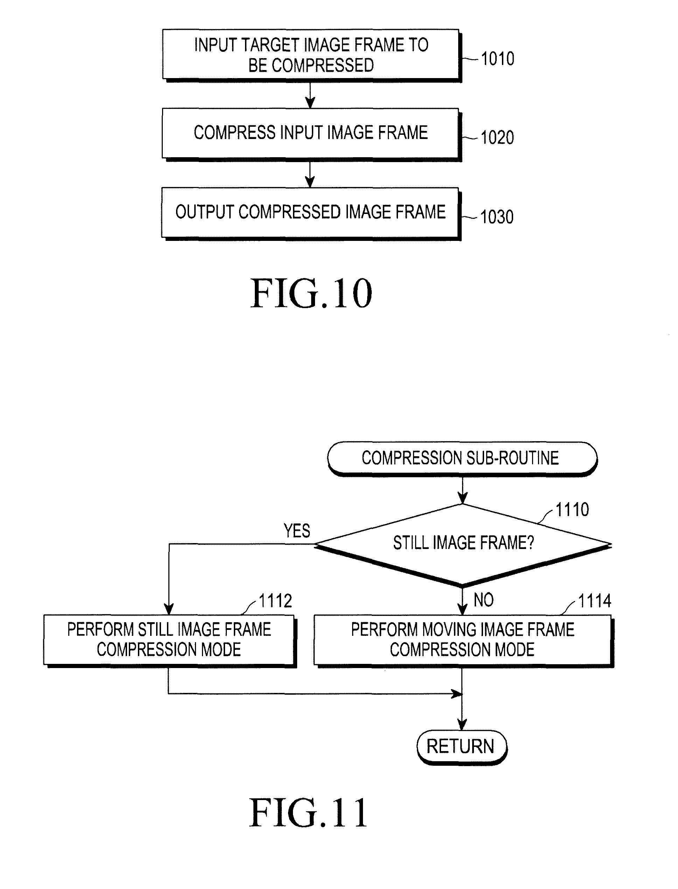

FIG. 10 is a flowchart of a control for compressing image data in an encoder according to an embodiment of the present invention. Note that FIG. 10 presumes only a case in which an uncompressed image frame is input.

Referring to FIG. 10, an encoder receives an input of a target image frame for compression in step 1010. An input scheme of the target image frame for compression may be determined based on a type of the target image frame. For example, in a case in which the type of the target image frame to be compressed is a still image, an image frame is input only when the encoder requests, and thus power consumption associated with an interface that inputs an image frame may be reduced until the encoder provides the request. When the input scheme of the target image frame is a moving image, image frames are successively input.

The encoder encodes an input image frame through a predetermined compression algorithm so as to compress a corresponding image frame in step 1020. A frame compression rate for encoding the image frame may be generally fixed. However, the frame compression rate may be variably applied for a predetermined situation, for improving an image quality associated with compression and decompression. For example, when it is predicted that an image quality of an image frame that is compressed and decompressed does not satisfy a set standard, the encoder may not change a frame compression rate of an image frame or may not perform compression. In addition, the encoder may change a compression algorithm for encoding a corresponding image frame.

To compress an image frame, the encoder performs encoding for each line forming a corresponding image frame. For this, the encoder performs scheduling for independently allocating a compression rate (or a number of compressed bits) for each line.

For example, the encoder performs scheduling that allocates a number of residual compressed bits generated in a predetermined line as a number of additional compressed bits for a line that is expected to have a lack of compressed bits. In this manner, the encoder performs scheduling so that a fixed frame compression rate is satisfied and a predetermined image quality is satisfied when each line of an image frame is compressed and decompressed.

The encoder outputs the compressed image frame in step 1030. The compressed image frame output by the encoder may be transferred to another internal device through the internal interface or may be transferred to another device through a communication network. Examples of the architecture that provides the compressed image frame to the internal device through the internal interface have been described through FIG. 1 through FIG. 3.

FIG. 11 is a flowchart of a control associated with compression performed by an encoder according to an embodiment of the present invention. That is, the flow of the control of FIG. 11 defines a sub-routine of step 1020 that compresses an input image frame in FIG. 10.

Referring to FIG. 11, when a target image frame to be compressed is input, the encoder determines a type of the input image frame in step 1110. The determination on the type of the image frame is performed based on control information provided for a corresponding image frame, is performed through analysis on image data forming a corresponding image frame, or is performed through an input scheme of an image frame. In this case, the architecture of providing an image frame among the described schemes provides information indicating whether or not a corresponding image frame is a still image.

When it is determined that the type of the input image frame is a still image, the encoder performs encoding with respect to the input image frame through a mode (still image frame compression mode) that is defined in advance for compressing a still image frame in step 1112. Otherwise, when the type of the input image frame is a moving image, the encoder performs encoding with respect to the input image frame through a mode (moving image frame compression mode) that is defined in advance for compressing a moving image frame in step 1114.

The encoding operation that compresses the image frame of the still image and the encoding operation that compresses the image frame of the moving image may be identical to the descriptions provided with reference to FIGs. 4 through 6.

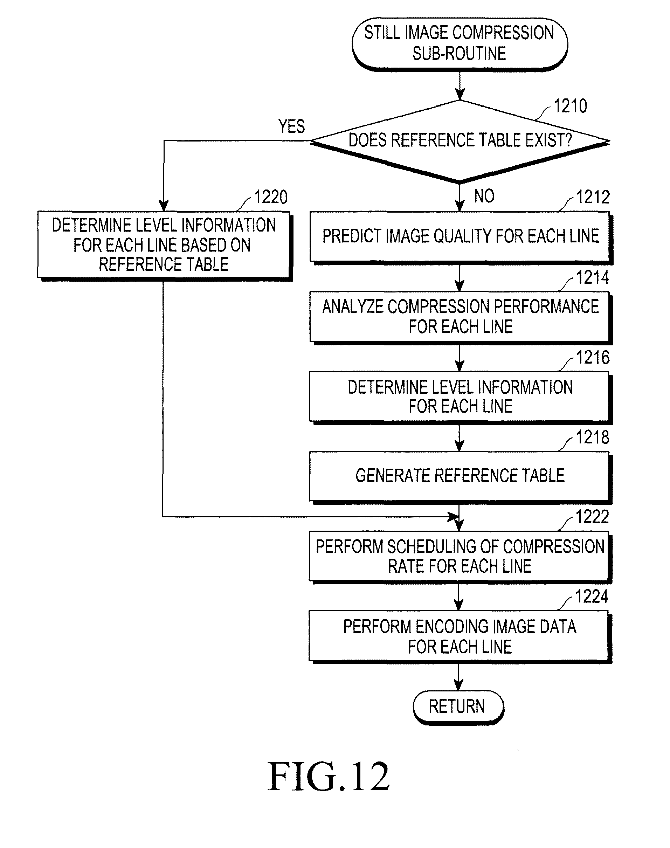

FIG. 12 is a flowchart of a control associated with a still image compression sub-routine that performs encoding with respect to an image frame of a still image frame according to an embodiment of the present invention. The flow of the control of FIG. 12 simultaneously takes into consideration the scheme of initial allocation and the scheme of reference allocation that allocates a compression rate (or a number of compressed bits) for each line.

Referring to FIG. 12, the encoder determines whether a reference table that defines level information corresponding to each line that forms an image frame exists, for encoding the image frame, in step 1210. When the reference table exists, it indicates that an image quality for each line, a compression performance, and the like has been analyzed by encoding a previous image frame through the scheme of initial allocation, and a level of each line has been classified based on the analysis. When the reference table does not exist, it indicates that a level of each line has not been classified based on analysis on an image quality for each line, a compression performance, and the like through encoding of an image frame.

Therefore, depending on the existence of the reference table, the encoder performs an operation of determining a compression rate (or a number of compressed bits) for each line through the scheme of initial allocation, or an operation of determining a compression rate (or a number of compressed bits) for each line through the scheme of reference allocation.

For example, when the reference table does not exist, the encoder performs scheduling of a compression rate for each line through operations corresponding to steps 1212 through 1218 and step 1222. However, when the reference table exists, the encoder performs scheduling of a compression rate for each line through operations corresponding to steps 1220 and 1222.

As described above regarding FIG. 5, the scheme of initial allocation is a scheme of scheduling a number of compressed bits for each line in a state in which level information for each line is not prepared, and the scheme of reference allocation is a scheme of scheduling a number of compressed bits for each line in a state in which level information for each line is prepared. The level information indicates information associated with a level defined for a compression performance predicted for a corresponding line, from among a plurality of levels defined for classifying a compression performance.

For example, when it is assumed that an N-1$^{th}$ image frame and an N$^{th}$ image frame are input, scheduling based on the scheme of initial allocation is performed with respect to the N-1$^{th}$ image frame, and scheduling based on the scheme of reference allocation is performed with respect to the N$^{th}$ image frame. However, scheduling based on the scheme of reference allocation, which uses the table that defines level information of each line prepared through the scheme of initial allocation, may be commonly applied to a plurality of image frames based on a predetermined period.

First, an operation associated with the scheme of initial allocation will be described. When it is determined that the reference table does not exist in step 1210, the encoder predicts an image quality for each line of an image frame input for compression in step 1212. For example, the encoder predicts an image quality of a corresponding line based on an analysis result of each line. That is, the image quality of the corresponding line is predicted based on an image information ratio obtained for the corresponding line by performing Wavelet transform for each line and analyzing a result of Wavelet transform.

The image information ratio may be defined based on a ratio (Num. of '0'/Avg. of LL band) of 'an accumulated number of '0's in image information corresponding to a corresponding line (Num. of '0')' to 'an average value of standard information (Avg. of LL band)'. 'The accumulated number of '0's in image information corresponding to a corresponding line (Num. of '0')' and 'the average value of standard information (Avg. of LL band)' may be obtained by performing Wavelet transform for each line forming an image frame.

To predict an image quality of a corresponding line based on the image information ratio, a table defining a mapping relationship between an image information ratio and a PSNR is prepared in advance. For example, a table may be prepared by analyzing a distribution of a PSNR corresponding to an image information ratio, classifying an image information ratio based on a plurality of levels by taking into consideration the analyzed PSNR distribution, and defining an image quality based on a PSNR for each classified image information ratio level. A PSNR corresponding to each line forming an image frame may be actually measured through Equation (1) and the like.

The encoder analyzes a compression performance for each line of the input image frame in step 1214. The compression performance may be defined based on a degree of compression that may be analyzed based on a number of bits input for compression and a number of bits compressed through encoding. For example, the encoder classifies, as a first group, a line of which a number of bits output through an actual compression is less than a predetermined standard bit number, and classifies, as a second group, a line of which a number of bits output through an actual compression is greater than the predetermined standard bit number. Based on the analysis, the encoder determines that the line classified as the first group has a good compression performance, and determines that the line classified as the second group has a relatively poor compression performance. Although the above described example assumes that a compression performance of a line is classified based on two groups, classification through two or more groups is possible.

The encoder determines level information of each line based on an image quality predicted for each line and an analyzed compression performance in step 1216. For example, the encoder classifies a level of a line of an image frame based on an image quality predicted for each line of the image frame, and a compression performance based on an actual measurement (whether a residual compressed bit or a lacking compressed bit occurs). The encoder may classify the lines of the image frame to be compressed, based on a predetermined criterion prepared based on the image quality for each line and a compression performance.

For example, when a number of compressed bits obtained by compressing a predetermined line or a predicted number of compressed bits is less than a set criterion (a standard compressed bit number), the encoder determines that a desired image quality may be obtained and a compression performance is excellent, and thus may classify the predetermined line as the "first level (good quality)". Otherwise, when the number of compressed bits obtained by compressing the predetermined line or the predicted number of compressed bits is greater than or equal to the set criterion (the standard compressed bit number), the encoder classifies the predetermined line as the "second level (moderate quality)" or the "third level (poor quality)" based on the image quality predicted for the predetermined line.

"The first level (good quality)", "the second level (moderate quality)", and "the third level (poor quality)" classified as described above may be defined as level information assigned for each line.

The encoder generates a reference table based on the level information determined for each line in step 1218. That is, when at least one image frame input for compression is a still image, the encoder may utilize level information classified for each line, so as to perform dynamic allocation of a compression rate based on an image quality and a compression performance for each line of an image frame. Therefore, it is preferable that the encoder forms a reference table based on level information classified for each line. Subsequently, the encoder may refer to the reference table when determining a compression rate for compressing each line forming an image frame. Here, the level information is information designating one of levels defined in advance to classify an image quality or a compression performance.

However, the present invention does not always generate the reference table. That is, when there is a scheme for managing level information for each line without preparing the reference table, the present invention may be embodied based on the scheme.

The encoder performs scheduling to determine a compression rate (or a number of compressed bits) for each line in step 1222. For example, the encoder accumulates a number of residual bits generated in at least one line and manages the accumulated number of residual bits through encoding performed for analyzing the compression performance, and performs scheduling to adjust a number of lacking compressed bits occurring in at least one line by utilizing the accumulated number of residual bits which has been managed. However, the encoder may not perform scheduling for adjusting a compression rate for each line only when the scheme of initial allocation is used. This is because the scheme of initial allocation performs an encoding operation for analyzing a compression performance before determining level information for each line. That is, when a compression performance is analyzed by an actual encoding operation, the encoder does not need to perform scheduling for determining a compression rate for each line.

In addition, in this instance, the encoder has already performed encoding with respect to image data for each line, and thus may also omit an encoding operation of step 1224.

Now, an operation associated with the scheme of reference allocation will be described. When it is determined that the reference table exists in step 1210, the encoder determines level information corresponding to a target line to be compressed from the reference table generated by the scheme of initial allocation in step 1220. For example, the level information corresponding to the target line to be compressed may be defined as one of a first level, a second level, and a third level. In this example, the first level has a relatively better compression performance or a relatively better image quality than the second level, and the second level has a relatively better compression performance or a relatively better image quality than the third level. However, the level defining the compression performance as defined above may not be defined by the first through the third levels. That is, the level that defines the compression performance may be subdivided for an embodiment, as described above.

When the encoder determines level information for each line, the encoder performs scheduling for determining a compression rate with respect to each line by taking into consideration the determined level information in step 1222. For example, the encoder performs scheduling that withdraws a number of residual compressed bits from a predetermined line, and utilizes the number of withdrawn residual compressed bits to prevent a lack of compressed bits in another line.

For example, in a case in which it is assumed that a compression performance is classified as "a first level (good quality)", "a second level (moderate quality)", and "a third level (poor quality)", when an image quality of a predetermined line is predicted as the first level (good quality), a compression rate (or a number of compressed bits) that is preferable for compressing image data of the first level is allocated to the predetermined line. The preferable compression rate is relatively higher than a fixed compression rate for compressing an image frame, and thus residual compressed bits may occur when the predetermined line is compressed based on the allocated compression rate. The encoder accumulates a number of residual compressed bits generated by the reason described above, and manages the accumulated number of residual compressed bits.

However, when the image quality of the predetermined line is predicted as the third level (poor quality), a preferable compression rate (or a preferable number of compressed bits) for compressing image data of the third level may be allocated to the predetermined line. The preferable compression rate is relatively lower than the fixed compression rate for compressing an image frame, and thus a lack of compressed bits may occur when the predetermined line is compressed by the allocated compression rate. The encoder utilizes the accumulated number of residual compressed bits that has been managed, so as to settle the lack of compressed bits occurring from the above described reason. That is, the encoder additionally allocates a number of compressed bits with respect to a line having a lack of compressed bits, by utilizing the number of residual compressed bits that has been managed.

In addition, depending on the embodiments, when the image quality of the predetermined line is predicted as the second level (moderate quality), a compression rate may be set so that residual compressed bits occur or a compression rate may be set so that a lack of compressed bits occurs. Preferably, when the image quality is predicted as the second level (moderate quality), the compression rate is set so that residual compressed bits occurs.

That is, the encoder performs scheduling that accumulates a number of residual compressed bits determined through compression of a line that is predicted as the first level (good quality) or the second level (moderate quality), and settles a lack of compressed bits determined through compression of a line predicted as the third level (poor quality).

The encoder performs encoding with respect to image data for each line using a predetermined compression algorithm, so as to output a compressed image data of a number of compressed bits based on the determined compression rate in step 1224. However, when encoding of image data for each line is performed in advance, the encoding operation of step 1224 may be omitted.

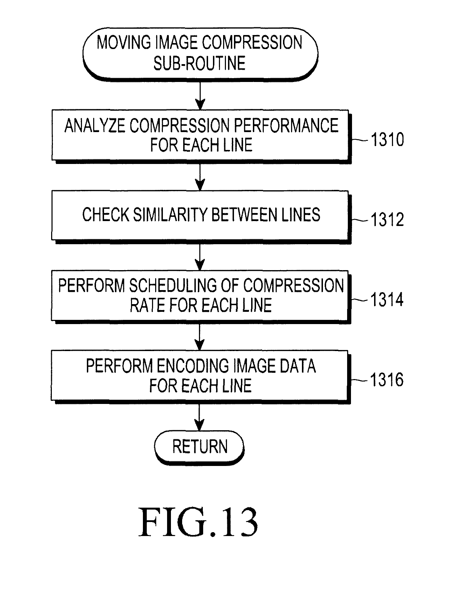

FIG. 13 is a flowchart of a control associated with a moving image compression sub-routine that performs encoding with respect to an image frame of a moving image according to an embodiment of the present invention.

Referring to FIG. 13, an encoder analyzes the compression performance for each line by predicting an image quality for each line of an image frame input for compression in step 1310. For example, the encoder may predict an image quality of a corresponding line based on an analysis result of each line. That is, the image quality of the corresponding line is predicted based on an image information ratio obtained for the corresponding line by performing Wavelet transform for each line and analyzing a result of Wavelet transform.

The image information ratio may be defined based on 'Num. of '0'/Avg. of LL band'. Here, 'the accumulated number of '0's in image information related to a corresponding line (Num. of '0')' and 'the average value of standard information (Avg. of LL band)' may be obtained by performing Wavelet transform for each line forming an image frame.

When a table that defines a mapping relationship between an image information ratio and a PSNR is prepared in advance, the encoder may obtain, from the table, a PSNR corresponding to an image information ratio obtained through Wavelet transform. Obtaining a PSNR using the image information ratio has been described, and thus a description thereof will be omitted.

The encoder checks a similarity between a previous line ($k$-$1^{th}$ line) and a current line ($k^{th}$ line) in a single image frame in step 1312. For example, it is preferable that the similarity between the two lines is checked before encoding, but it may be checked after encoding. To check the similarity between lines before encoding, the encoder may omit encoding of step 1316 of FIG. 13.

The encoder performs scheduling with respect to a compression rate (or a number of compressed bits) for each line, based on a compression performance for each line and a similarity between lines in step 1314. For example, when a similarity with a previous line is within a predetermined range and a predicted compression performance of a current line has a predetermined level, that is, a level in which a residual compressed bit is expected to occur, the encoder determines a number of residual compressed bits to be withdrawn from a number of compressed bits that is expected to be obtained through a frame compression rate.

However, when the similarity with the previous line is outside the predetermined range and a compression performance predicted for the current line has a level in which a residual compressed bit is expected to occur, the encoder determines that allocation is to be performed based on a fixed value set in advance.

For example, if a similarity is within a predetermined range, and a predicted compression performance satisfies a level in which a residual bit occurs, a fixed number of bits set in advance for withdrawing bits based on an image quality is withdrawn and a predetermined number of bits set in advance in association with a similarity is additionally withdrawn, from a standard compressed bit number corresponding to a number of compressed bits that may be allocated based on a frame compression rate. However, when the similarity is outside the predetermined range, and a predicted image quality satisfies a level in which a residual bit occurs, only a fixed number of compressed bits set in advance for withdrawing compressed bits based on an image quality is withdrawn from the standard compressed bit number corresponding to a number of compressed bits that may be allocated based on a frame compression rate.

For a result other than the above described cases, a number of withdrawn residual compressed bits may be additionally allocated.

The encoder performs scheduling that withdraws a number of residual compressed bits or additionally allocates a number of lacking compressed bits, which is generated through encoding a current line based on the determined level.

In particular, the encoder determines whether the similarity between the previous line and the current line that has been checked is within a predetermined range. The determination enables an image quality of the previous line to be reflected when a level of the current line is classified, only when image data of the previous line and image data of the current line are more similar than a predetermined level.

When the similarity between the previous line and the current line is within a predetermined range, the encoder determines the image quality of the current line based on a result of the determination on whether an image quality predicted for the current line satisfies a required standard. That is, when it is assumed that an image quality of each line is classified into a first level (good quality), a second level (moderate quality), and a third level (poor quality), and an image quality of the previous line is the first level (good quality), the image quality of the current line is determined to be the first level (good quality).

When the image quality of the current line is determined to be the first level (good quality), the encoder accumulates a number of residual compressed bits generated through encoding with respect to the current line to a number of residual compressed bits that has been managed, and manages the accumulated number of compressed bits. For a case in which the image quality of the current line is the second level (moderate quality), the encoder determines that a residual compressed bit occurs when the current line is encoded.

In this example, a number of residual compressed bits to be withdrawn may be determined based on a number of bits, agreed upon in advance, to be withdrawn based on a similarity and a number of bits set to be withdrawn for each level corresponding to a compression performance.

Conversely, when the image quality of the current line is determined to be the third level (poor quality), the encoder uses an accumulated number of residual compressed bits that has been managed, so as to adjust a number of lacking compressed bits generated through encoding with respect to the current line. For example, a number of bits to be additionally allocated with respect to a line where a lack of compressed bits occurs may be determined based on 'a total accumulated number of compressed bits/a number of remaining lines that are uncompressed in the current frame'.

The encoder performs encoding with respect to image data for each line using a predetermined compression algorithm, and outputs a compressed image data of a number of compressed bits based on the determined compression rate in step 1316. However, when encoding of image data for each line is performed in advance, the encoding operation of step 1316 may be omitted.

As another embodiment of the present invention, when an image quality after compression and decompression of an input image frame is expected to be less than a standard, the input image frame may not be compressed, a compression algorithm for compressing the input image frame may be changed, or a compression rate may be adjusted so as to prevent the image quality from being deteriorated.

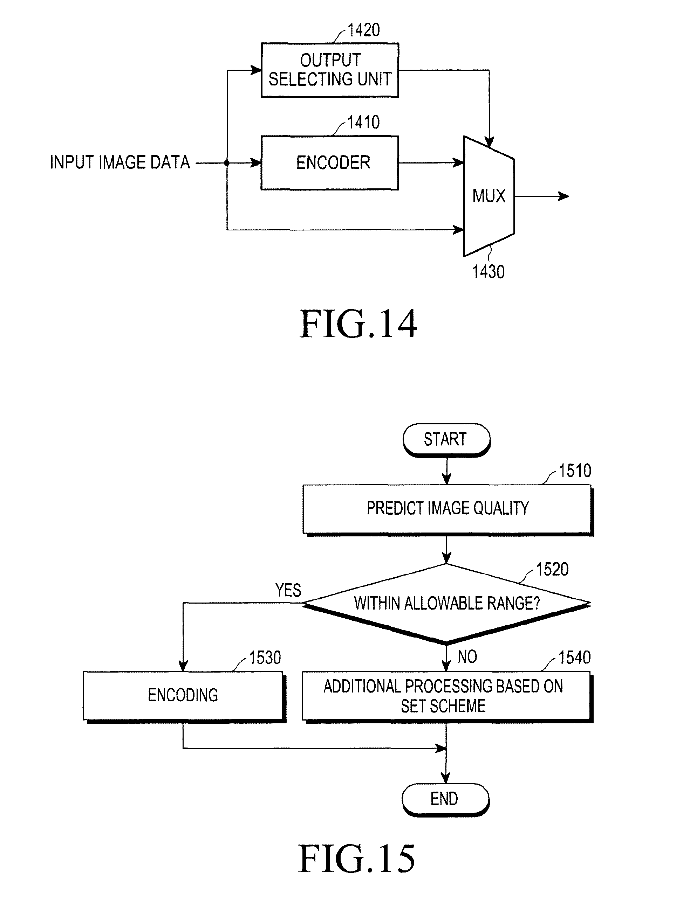

FIG. 14 is a diagram illustrating a configuration of an image processing device according to another embodiment of the present invention.

Referring to FIG. 14, an encoder 1410 outputs an image frame that is compressed by encoding an input image frame through a predetermined compression algorithm.

An output selecting unit 1420 predicts an image quality with respect to the input image frame, and generates an output selection signal based on a level of the predicted image quality. The output selecting unit 1420 predicts an image quality with respect to the input image frame using Wavelet transform or predicts the image quality using two successive preceding image frames, which will be described later.

Only when the predicted image quality is within a predetermined allowable range, the output selecting unit 1420 generates an output selection signal that selects a compressed image frame that is encoded by the encoder 1410. When the predicted image quality is outside the predetermined allowable range, the output selecting unit 1420 generates an output selection signal that selects an image frame before encoding, that is, an input image frame.

A multiplexer (MUX) 1430 uses a compressed image frame encoded by the encoder 1410 and an image frame before encoding, as inputs, and selects one of the two inputs based on an output selection signal generated by the output selecting unit 1420 and outputs the selected input.

According to an image processing device as described above, if an image quality predicted for an input image frame is insufficient to satisfy a set standard, the input image frame is not encoded and is bypassed. That is, only when the image quality predicted for the input image frame satisfies the set standard, the input image frame is encoded and a compressed image frame is output.

Therefore, the image processing device of FIG. 14 preferentially analyzes an image of a previous frame from a point in time of compression, predicts an image quality expected when an image of a current frame is compressed and decompressed based on the analysis result, and performs a separate processing with respect to the image of the current frame when the predicted image quality is less than a standard image quality.

For example, to predict an image quality of an $N^{th}$ frame, Wavelet transform is performed with respect to an $N-1^{th}$ frame, an image quality level is classified for each line using a number of '0's determined based on the transform result and an average value of low band data. Accordingly, the image quality of the $N^{th}$ frame is predicted based on a weight assigned for each level.

In another example, to predict an image quality of an $N^{th}$ frame, an image of an $N-2^{nd}$ frame which is one of the two previous frames is compressed and decompressed, and the compressed and decompressed image of the $N-2^{nd}$ frame is compared with an image of an $N-1^{th}$ frame. Accordingly, the image quality of the $N^{th}$ frame is predicted based on a result of the comparison.

FIG. 15 is a flowchart of a control for determining a scheme of processing an image frame based on a predicted image quality according to another embodiment of the present invention.

Referring to FIG. 15, an image processing unit predicts an image quality with respect to a previous image frame in step 1510. For example, a scheme of predicting an image quality with respect to an image frame includes a scheme of using a single previous image frame and a scheme of using two previous image frames.

The image processing unit determines whether the predicted image quality exists within an allowable range in step 1520. The allowable range sets an area of an image quality that is desired to be obtained from an image frame that is to be acquired through compression and decompression.

When the predicted image quality is within the allowable range, the image processing unit determines that an image frame having a quality of a desired level may be obtained through compression and decompression and thus, performs encoding with respect to a current image frame in step 1530. However, when the predicted image quality is outside the allowable range, the image processing unit determines that an image frame having a quality of a desired level may not be obtained through compression and decompression and thus, performs additional processing with respect to the current image frame based on a set scheme in step 1540. The set scheme for additional processing may be one of a scheme of bypassing an input image frame without encoding, a scheme of changing a compression algorithm, and a scheme of adjusting a compression rate.

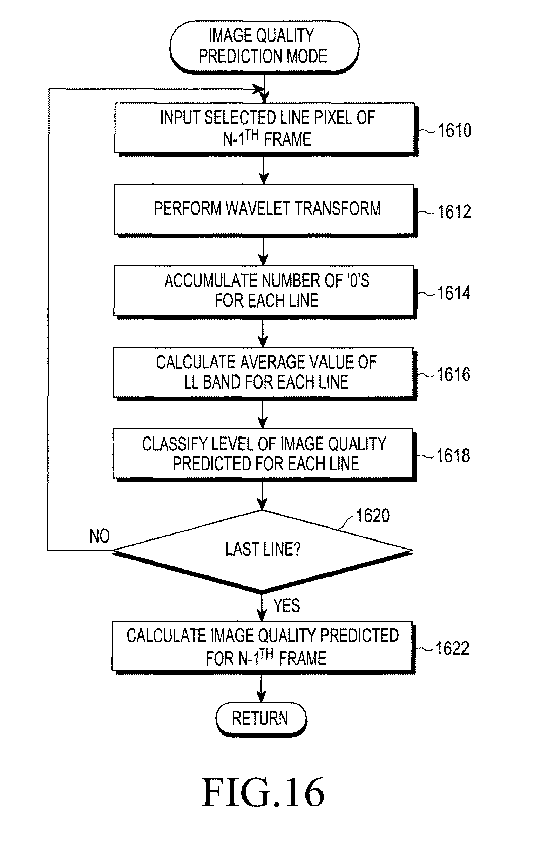

FIG. 16 is a flowchart of a control associated with a scheme of using a single image frame for image quality prediction of FIG. 15.

Referring to FIG. 16, an image processing unit selects a single line from an N-1th frame, and inputs a pixel value of the selected line in step 1610. The image processing unit performs Wavelet transform with respect to the input pixel value of the selected line in step 1612.

The image processing unit determines a number of '0's corresponding to the selected line from a result value obtained through Wavelet transform, and additionally accumulates the determined number of '0's to a number of '0's accumulated in advance in step 1614. Also, the image processing unit additionally reflects low level band data corresponding to the result value obtained through Wavelet transform to an average value of low level band data calculated in advance, so as to update the average value of the low level band data in step 1616.

The image processing unit predicts an image quality of the selected line based on the accumulated number of '0's and the average value of the low level band data, and classifies the predicted image quality as one of a plurality of levels in step 1618. For example, the plurality of levels that classifies an image quality may be defined as a first level through a third level.

The image processing unit determines whether a previously selected line corresponds to the last line of an input image frame in step 1620. When it is determined that the previously selected line is not the last line, the image processing unit returns to step 1610 to select a next line of the N-1th frame and repeats the described operations.

However, when it is determined that the previously selected line is the last line, the image processing unit calculates a predicted image quality with respect to the N-1th frame in step 1622. For example, the image processing unit reflects a number of lines classified for each level and a weight assigned for each level, so as to calculate a predicted image quality with respect to the N-1th frame.

As described above, based on the image quality predicted for the N-1th frame, whether an image quality that may be obtained when an Nth frame is compressed exceeds a standard image quality may be determined.

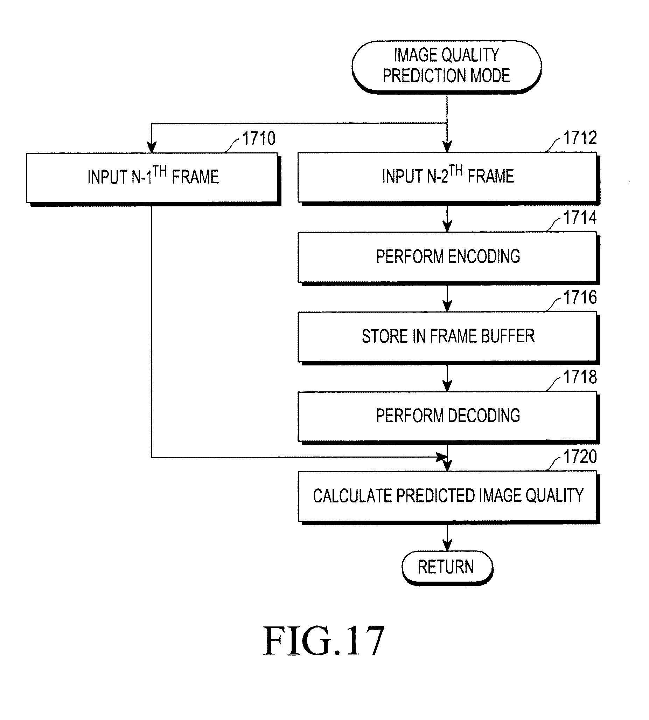

FIG. 17 is a flowchart of a control associated with a scheme of using two image frames for image quality prediction of FIG. 15.

Referring to FIG. 17, an image processing unit receives an input of an N-1th frame and an N-2nd frame in steps 1710 and 1712, respectively. The image processing unit performs encoding with respect to the N-2nd frame in step 1714, and stores a compressed image frame obtained through encoding in a frame buffer in step 1716. The image processing unit performs decoding with respect to the compressed image frame stored in the frame buffer, and outputs a decompressed image frame in step 1718. The image processing unit does not compress and decompress the N-1th frame which is a subsequent image frame, and outputs as it is.

The image processing unit calculates an image quality with respect to a current frame (Nth frame) based on the N-2nd frame obtained through compression and decompression and the N-1th frame that is not compressed and decompressed, in step 1720.

For example, since a processing delay of the decompressed N-2nd frame and a processing delay of the N-1th frame which is bypassed are different from each other and thus, the image processing unit matches the processing delays of the two frames. Subsequently, the image processing unit calculates image qualities for the decompressed N-2nd frame and the N-1th frame that is bypassed, of which processing delays are matched, and determines a scheme for processing a current frame, that is, the Nth frame, based on the calculated image qualities.

It is preferable that the N-1th frame and the N-2nd frame, which are utilized for determining the scheme for processing the Nth frame, are not used as image data for displaying and the like

As described above, according to operations based on a flow of a control of FIGs. 15 through 17, compression and decompression are normally performed with respect to only an image frame of which an image quality (PSNR) satisfies a standard. In a case of an image frame of which an image quality (PSNR) is less than the standard, the image frame may be bypassed without compression, compression and decompression are performed by applying a specialized compression algorithm such as a block coding and the like, and compression and decompression are performed by lowering a compression rate.

While the detailed description of the present invention has been shown and described with reference to certain embodiments thereof, it will be understood by those skilled in the art that various changes may be made therein without departing from the scope of the present invention. Therefore, the scope of the present invention cannot be determined merely on the basis of the described embodiments. Rather, the scope of the present invention should be determined on the basis of the accompanying claims and their equivalents. In addition, the modifications should not be understood separately from the technical idea or concept of the present invention.

**Claims**

1. A method for an image processing device to compress, for each line, an image frame formed of a plurality of lines, the method comprising:

   predicting an image quality of each line forming a single image frame;
   independently determining a compression rate for each line so as to obtain the image quality predicted for each line; and
   compressing an image data of a predetermined line of the single image frame by using a compression rate independently determined for the predetermined line.

2. An image processing device for compressing, for each line, an image frame formed of a plurality of lines, the image processing device comprising:

   a frame buffer that receives and stores an image frame to be compressed; and
   an encoder configured to predict an image quality of each line forming a single image frame output from the frame buffer, independently determine a compression rate for each line so as to obtain the image quality predicted for each line, and compress an image data of a predetermined line of the single image frame by using a compression rate independently determined for the predetermined line.

3. The method of claim 1 or the image processing device of claim 2, wherein independently determining the compression rate for each line comprises allocating a number of compressed bits to be generated by compressing a corresponding line of the single image frame.

4. The method or the image processing device of claim 2, wherein the compression rate for each line is determined so that a total number of compressed bits that is expected to be generated when all lines forming the single image frame are compressed based on the compression rate determined for each line forming the single image frame is less than or equal to a total number of compressed bits that is expected to be generated when all lines forming the single image frame are compressed based on a single standard compression rate.

4. The method of claim 3, further comprising:

   when a number of allocated compressed bits corresponding to the compression rate independently determined for the predetermined line is less than a standard compressed bit number corresponding to a number of compressed bits to be generated when an image data of the predetermined line is compressed based on the standard compression rate, accumulating a number of bits corresponding to a difference between a number of actually compressed bits and the standard compressed bit number and treating the accumulated number of bits as a number of residual bits.

5. The image processing device of claim 3, wherein, when a number of allocated compressed bits corresponding to the compression rate independently determined for the predetermined line is less than a standard compressed bit number corresponding to a number of compressed bits to be generated when an image data of the predetermined line is compressed based on the standard compression rate, the encoder accumulates a number of bits corresponding to a difference between the number of actually compressed bits and the standard compressed bit number, and treats the accumulated number of bits as a number of residual bits.

6. The method of claim 4 or the image processing device of claim 5, wherein the number of allocated compressed bits corresponds to a number of compressed bits generated by compressing the image data of the predetermined line using the compression rate independently determined for the predetermined line.

**7.** The method of claim 4 or the image processing device of claim 5, wherein the number of allocated compressed bits corresponds to a number of compressed bits previously agreed upon to be allocated for the compression rate independently determined for the predetermined line.

**8.** The method of claim 4, wherein independently determining the compression rate for the predetermined line comprises:

additionally allocating a number of compressed bits with respect to the predetermined line within a range of the number of residual bits in addition to the standard compressed bit number when the compression rate determined for the predetermined line is relatively lower than the standard compression rate,
wherein the number of additionally allocated compressed bits is allocated based on a number of bits corresponding to a difference between the standard compressed bit number and a number of compressed bits to be generated when the image data of the predetermined line is compressed based on the compression rate determined for the predetermined line.

**9.** The image processing device of claim 5, wherein the encoder performs:

additionally allocating a number of compressed bits with respect to the predetermined line within a range of the number of residual bits in addition to the standard compressed bit number when the compression rate determined for the predetermined line is lower than the standard compression rate, and
wherein the number of additionally allocated compressed bits is allocated based on a number of bits corresponding to a difference between the standard compressed bit number and a number of compressed bits to be generated when the image data of the predetermined line is compressed based on the compression rate determined for the predetermined line.

**10.** The method of claim 8, wherein the number of additionally allocated compressed bits is allocated based on a quotient obtained by dividing the number of residual bits by a number of lines that are not compressed among the lines forming the single image frame.

**11.** The image processing device of claim 9, wherein the encoder allocates the number of additionally allocated compressed bits based on a quotient obtained by dividing the number of residual bits by a number of lines that are not compressed among the lines forming the single image frame.

**12.** The method of claim 10 or the image processing device of claim 11, wherein, when the single image frame is an $N^{th}$ image frame and a still image frame, predicting an image quality of a $k^{th}$ line from among a plurality of lines forming the $N^{th}$ image frame is performed based on an image quality obtained by analyzing a $k^{th}$ line from among a plurality of lines forming an $N\text{-}1^{th}$ image frame, and
wherein N is an index that is defined by a positive integer for identifying an image frame, k is an index that is defined by a positive integer for indicating one of the plurality of lines forming a single image frame, K is a number of lines forming the $N^{th}$ image frame, and $1<k\leq K$.

**13.** The method of claim 12, wherein analyzing the $k^{th}$ line in the $N\text{-}1^{th}$ image frame comprises:

predicting the image quality of the $k^{th}$ line in the $N\text{-}1^{th}$ image frame using a ratio of a data average value of a low level band obtained by Wavelet transform with respect to the $k^{th}$ line in the $N\text{-}1^{th}$ image frame to an accumulated number of '0's in image data related to the $k^{th}$ line in the $N\text{-}1^{th}$ image frame.

**14.** The image processing device of claim 12, wherein the encoder performs:

predicting the image quality of the $k^{th}$ line in the $N\text{-}1^{th}$ image frame using a ratio of a data average value of a low level band obtained by Wavelet transform with respect to the $k^{th}$ line in the $N\text{-}1^{th}$ image frame to an accumulated number of '0's in image data related to the $k^{th}$ line in the $N\text{-}1^{th}$ image frame.

**15.** The method of claim 1 or the image processing device of claim 2, wherein, when the single image frame is an $N^{th}$ image frame and a moving image frame, a compression rate of a $k^{th}$ line from among a plurality of lines forming the $N^{th}$ image frame is independently determined based on a compression performance predicted when an image data of the $k^{th}$ line in the $N^{th}$ image frame is compressed and compression information of a $k-1^{th}$ line in the $N^{th}$ image frame.

**16.** The method of claim 1 or the image processing device of claim 2, wherein, when the single image frame is an $N^{th}$ image frame and a moving image frame, an image quality of a $k^{th}$ line from among a plurality of lines forming the $N^{th}$ image frame is predicted based on a similarity between the $k^{th}$ line in the $N^{th}$ image frame and a $k-1^{th}$ line in the $N^{th}$ image frame, a ratio of a data average value of a low level band obtained by Wavelet transform with respect to the $k^{th}$ line in the $N^{th}$ image frame to an accumulated number of '0's in image data related to the $k^{th}$ line in the $N^{th}$ image frame, and an image quality of the $k-1^{th}$ line in the $N^{th}$ image frame, and

wherein N is an index that is defined by a positive integer for identifying an image frame, k is an index that is defined by a positive integer for indicating one of the plurality of lines forming a single image frame, K is a number of lines forming the $N^{th}$ image frame, and $1<k\leq K$.

FIG.1

FIG.2

FIG.3

FIG.4

FIG.5

FIG.6

1

2000 pixel

stage 1

1000 pixel (Low Freq.)          1000 pixel (High Freq.)

stage 2

500 pixel          500 pixel
(Low Freq.)        (High Freq.)

stage 3

250 pixel     250 pixel
(Low Freq.)   (High Freq.)

250 pixel      250 pixel      500 pixel          1000 pixel
(LL Band,     (High Freq.)   (High Freq.)        (High Freq.)
Low Freq.)

FIG.7

FIG.8

FIG.9

INPUT TARGET IMAGE FRAME TO BE COMPRESSED ~1010

COMPRESS INPUT IMAGE FRAME ~1020

OUTPUT COMPRESSED IMAGE FRAME ~1030

# FIG.10

COMPRESSION SUB-ROUTINE

STILL IMAGE FRAME? 1110

YES

PERFORM STILL IMAGE FRAME COMPRESSION MODE 1112

NO

PERFORM MOVING IMAGE FRAME COMPRESSION MODE 1114

RETURN

# FIG.11

```
        ┌─────────────────────────┐
        │  STILL IMAGE COMPRESSION │
        │      SUB-ROUTINE         │
        └─────────────────────────┘
                     │
                     ▼           ⟋1210
        YES  ◇ DOES REFERENCE TABLE EXIST? ◇
         │                       │ NO   ⟋1212
         ▼  ⟋1220                ▼
┌──────────────────────┐  ┌──────────────────────────────┐
│ DETERMINE LEVEL      │  │ PREDICT IMAGE QUALITY FOR EACH │
│ INFORMATION FOR EACH │  │           LINE                 │
│ LINE BASED ON        │  └──────────────────────────────┘
│ REFERENCE TABLE      │                │  ⟋1214
└──────────────────────┘                ▼
         │              ┌──────────────────────────────┐
         │              │ ANALYZE COMPRESSION PERFORMANCE│
         │              │        FOR EACH LINE           │
         │              └──────────────────────────────┘
         │                             │  ⟋1216
         │                             ▼
         │              ┌──────────────────────────────┐
         │              │ DETERMINE LEVEL INFORMATION    │
         │              │        FOR EACH LINE           │
         │              └──────────────────────────────┘
         │                             │  ⟋1218
         │                             ▼
         │              ┌──────────────────────────────┐
         │              │    GENERATE REFERENCE TABLE    │
         │              └──────────────────────────────┘
         │                             │  ⟋1222
         └──────────────────────────►  ▼
                        ┌──────────────────────────────┐
                        │ PERFORM SCHEDULING OF          │
                        │ COMPRESSION RATE FOR EACH LINE │
                        └──────────────────────────────┘
                                       │  ⟋1224
                                       ▼
                        ┌──────────────────────────────┐
                        │ PERFORM ENCODING IMAGE DATA    │
                        │        FOR EACH LINE           │
                        └──────────────────────────────┘
                                       │
                                       ▼
                                   ( RETURN )
```

FIG.12

MOVING IMAGE COMPRESSION
SUB-ROUTINE

ANALYZE COMPRESSION PERFORMANCE
FOR EACH LINE — 1310

CHECK SIMILARITY BETWEEN LINES — 1312

PERFORM SCHEDULING OF COMPRESSION
RATE FOR EACH LINE — 1314

PERFORM ENCODING IMAGE DATA
FOR EACH LINE — 1316

RETURN

FIG.13

1420

OUTPUT
SELECTING UNIT

1410

INPUT IMAGE DATA ——→ ENCODER

MUX ——→

1430

# FIG.14

START

1510

PREDICT IMAGE QUALITY

1520

WITHIN ALLOWABLE RANGE?

YES

1530

ENCODING

NO

1540

ADDITIONAL PROCESSING BASED ON SET SCHEME

END

# FIG.15

IMAGE QUALITY
PREDICTION MODE

INPUT SELECTED LINE PIXEL OF
N-1$^{TH}$ FRAME — 1610

PERFORM WAVELET TRANSFORM — 1612

ACCUMULATE NUMBER OF '0'S
FOR EACH LINE — 1614

CALCULATE AVERAGE VALUE OF
LL BAND FOR EACH LINE — 1616

CLASSIFY LEVEL OF IMAGE QUALITY
PREDICTED FOR EACH LINE — 1618

1620
LAST LINE?

NO

YES

CALCULATE IMAGE QUALITY PREDICTED
FOR N-1$^{TH}$ FRAME — 1622

RETURN

FIG.16

```
                          ┌─────────────────────┐
                          │   IMAGE QUALITY     │
                          │  PREDICTION MODE    │
                          └─────────────────────┘
                                    │
                                    ▼
```

┌─────────────────────────┐          ┌─────────────────────────┐
│                    ⟋1710 │          │                    ⟋1712 │
│   INPUT N-1$^{TH}$ FRAME │          │   INPUT N-2$^{TH}$ FRAME │
└─────────────────────────┘          └─────────────────────────┘
                                                  │
                                                  ▼
                                     ┌─────────────────────────┐
                                     │                    ⟋1714 │
                                     │    PERFORM ENCODING      │
                                     └─────────────────────────┘
                                                  │
                                                  ▼
                                     ┌─────────────────────────┐
                                     │                    ⟋1716 │
                                     │   STORE IN FRAME BUFFER  │
                                     └─────────────────────────┘
                                                  │
                                                  ▼
                                     ┌─────────────────────────┐
                                     │                    ⟋1718 │
                                     │    PERFORM DECODING      │
                                     └─────────────────────────┘
                                                  │
                                                  ▼
                                     ┌─────────────────────────────┐
                                     │                        ⟋1720 │
                                     │ CALCULATE PREDICTED IMAGE QUALITY │
                                     └─────────────────────────────┘
                                                  │
                                                  ▼
                                          ┌──────────────┐
                                          │    RETURN    │
                                          └──────────────┘

# FIG.17

Europäisches
Patentamt

European
Patent Office

Office européen
des brevets

# EUROPEAN SEARCH REPORT

Application Number

EP 14 07 5072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI L ET AL: "Adaptive rate control for Motion JPEG2000", IET IMAGE PROCESSING, vol. 3, no. 2, 9 April 2009 (2009-04-09), pages 75-87, XP006032713, ISSN: 1751-9667, DOI: 10.1049/IET-IPR:20080053 * abstract * * sections 1-3 * | 1-16 | INV. H04N19/63 H04N19/115 H04N19/136 H04N19/154 H04N19/174 |
| X | WO 2008/070843 A2 (WIQUEST COMMUNICATIONS INC [US]; FERNANDES FELIX C [US]) 12 June 2008 (2008-06-12) * page 1, lines 23-27 * * page 3, line 13 - page 5, line 6 * * page 9, line 34 - page 16, line 17 * * figures 3,8,9,25-28 * | 1-16 | |
| X | THOMAS J FLOHR ET AL: "Scan-based processing with JPEG 2000", PROCEEDINGS OF SPIE, vol. 4115, 28 December 2000 (2000-12-28), XP055179794, ISSN: 0277-786X, DOI: 10.1117/12.411559 * abstract * * sections 2.2-2.4 and 3.2 * | 1-16 | TECHNICAL FIELDS SEARCHED (IPC) H04N |
| X | CHRISTOPHE PARISOT ET AL: "Scan-based Quality Control for JPEG2000 using R-D Models", EUSIPCO, EURASIP XI EUROPEAN SIGNAL PROCESSING CONFERENCE, 3 September 2002 (2002-09-03), pages 1-4, XP055179387, * sections 1-3 * | 1,2 | |

-/--

The present search report has been drawn up for all claims

| Place of search | Date of completion of the search | Examiner |
|---|---|---|
| The Hague | 30 March 2015 | André, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## EUROPEAN SEARCH REPORT

Application Number

EP 14 07 5072

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 986 712 A (PETERSON RICHARD MATEER [US] ET AL) 16 November 1999 (1999-11-16) * figures 1,3 * * column 2, line 49 - column 4, line 52 * * column 7, line 1 - column 11, line 61 * ----- | 1-16 | |
| A | YUN-GU LEE ET AL: "An intra-frame rate control algorithm for ultra low delay H.264/AVC coding", IEEE INTERNATIONAL CONFERENCE ON ACOUSTICS, SPEECH AND SIGNAL PROCESSING, 31 March 2008 (2008-03-31), pages 1041-1044, XP031250733, ISBN: 978-1-4244-1483-3 * sections 2, 3.1 and 3.2 * ----- | 1-16 | |
| A | CHRYSAFIS C ET AL: "Line based reduced memory, wavelet image compression", DATA COMPRESSION CONFERENCE, 30 March 1998 (1998-03-30), pages 398-407, XP010276575, DOI: 10.1109/DCC.1998.672177 ISBN: 978-0-8186-8406-7 * the whole document * ----- | 1-16 | TECHNICAL FIELDS SEARCHED (IPC) |
| A | PING XU ET AL: "A New Rate Control Algorithm for H.264", IEEE INTERNATIONAL CONFERENCE ON INTEGRATION TECHNOLOGY, 1 March 2007 (2007-03-01), pages 574-578, XP031127165, ISBN: 978-1-4244-1091-0 * the whole document * ----- -/-- | 1-16 | |

The present search report has been drawn up for all claims

| Place of search | Date of completion of the search | Examiner |
|---|---|---|
| The Hague | 30 March 2015 | André, Thomas |

EPO FORM 1503 03.82 (P04C01)

Europäisches
Patentamt

European
Patent Office

Office européen
des brevets

# EUROPEAN SEARCH REPORT

**Application Number**

EP 14 07 5072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHI-WANG HO ET AL: "Low-Complexity Rate Control for Efficient H.263 to H.264/AVC Video Transcoding", IEEE INTERNATIONAL CONFERENCE ON IMAGE PROCESSING, 1 October 2006 (2006-10-01), pages 853-856, XP031048771, ISBN: 978-1-4244-0480-3 * the whole document * | 1-16 | |
| A | SMITH, MICHAEL D. ET AL: "Constant quality JPEG2000 rate control for digital cinema", VISUAL COMMUNICATIONS AND IMAGE PROCESSING, 30 January 2007 (2007-01-30), XP030081122, * the whole document * | 1-16 | |
| A | ROUNTREE J C ET AL: "SCAN-BASED IMPLEMENTATION OF JPEG 2000 EXTENSIONS", PROCEEDINGS OF SPIE, vol. 4472, 31 July 2001 (2001-07-31), pages 276-281, XP001182467, ISSN: 0277-786X, DOI: 10.1117/12.449761 ISBN: 978-1-62841-213-0 * the whole document * | 1-16 | **TECHNICAL FIELDS SEARCHED (IPC)** |
| A | WO 99/28858 A1 (ALGOTEC SYSTEMS LTD [IL]; BURAK YORAM [IL]; NIZRY RONEN [IL]; BENJAMIN) 10 June 1999 (1999-06-10) * the whole document * | 1-16 | |

The present search report has been drawn up for all claims

| Place of search | Date of completion of the search | Examiner |
|---|---|---|
| The Hague | 30 March 2015 | André, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 07 5072

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2015

| Patent document cited in search report | | Publication date | Patent family member(s) | | Publication date |
|---|---|---|---|---|---|
| WO 2008070843 | A2 | 12-06-2008 | CN | 101755464 A | 23-06-2010 |
| | | | EP | 2103147 A2 | 23-09-2009 |
| | | | JP | 5221557 B2 | 26-06-2013 |
| | | | JP | 5425865 B2 | 26-02-2014 |
| | | | JP | 2010512692 A | 22-04-2010 |
| | | | JP | 2012085313 A | 26-04-2012 |
| | | | KR | 20090096516 A | 10-09-2009 |
| | | | US | 2008137737 A1 | 12-06-2008 |
| | | | US | 2008137738 A1 | 12-06-2008 |
| | | | WO | 2008070843 A2 | 12-06-2008 |
| US 5986712 | A | 16-11-1999 | NONE | | |
| WO 9928858 | A1 | 10-06-1999 | NONE | | |

EPO FORM P0459

For more details about this annex : see Official Journal of the European Patent Office, No. 12/82